# EUROPEAN PATENT APPLICATION

(11) **EP 4 733 902 A1**
(43) Date of publication of application: **29.04.2026**
(21) Application number: 24845836.6
(22) Date of filing: 27.06.2024
(51) Int. Cl.: G06F 3/01, G06F 3/04842, G06F 1/16, G10L 15/26, G06F 3/16

(54) **WEARABLE DEVICE FOR IDENTIFYING USER INPUT BY USING ONE OR MORE SENSORS, AND METHOD THEREFOR**

(30) Priority: 26.07.2023 KR 20230097742; 05.09.2023 KR 20230117552
(71) Applicant: Samsung Electronics Co., Ltd., Suwon-si, Gyeonggi-do 16677 (KR)
(72) Inventor: LEE, Eunkyung, Suwon-si, Gyeonggi-do 16677 (KR); KIM, Taegu, Suwon-si, Gyeonggi-do 16677 (KR); SONG, Gajin, Suwon-si, Gyeonggi-do 16677 (KR); SHIN, Hoseon, Suwon-si, Gyeonggi-do 16677 (KR); YEO, Jaeyung, Suwon-si, Gyeonggi-do 16677 (KR); JO, Hyeoncheon, Suwon-si, Gyeonggi-do 16677 (KR)
(74) Representative: Gulde & Partner
(86) International application number: PCT/KR2024/008965
(87) International publication number: WO 2025/023532

(57) **Abstract**

A processor of a wearable device, according to one embodiment, can identify a first input for a point, spaced apart from all of a plurality of virtual objects, by using a first sensor from among a plurality of sensors. The at least one processor can: identify at least one virtual object adjacent to the point from among the plurality of virtual objects in response to a second input for the point, identified on the basis of the first sensor within a designated period after the first input is identified; and display, on a display, a visual object that can be identified by a second sensor from among the plurality of sensors and indicates a third input corresponding to a function of the at least one virtual object.

## Description

### [TECHNICAL FIELD]

The present disclosure relates to a wearable device for identifying a user input by using one or more sensors, and a method therefor.

### [BACKGROUND ART]

In order to provide an enhanced user experience, an electronic device that provides an augmented reality (AR) service displaying information generated by a computer in connection with an external object in the real-world is being developed. The electronic device may be a wearable device that may be worn by a user. For example, the electronic device may be AR glasses and/or a head-mounted device (HMD).

The above-described information may be provided as a related art for the purpose of helping understanding of the present disclosure. No argument or decision is made as to whether any of the above description may be applied as a prior art related to the present disclosure.

### [DISCLOSURE]

### [TECHNICAL SOLUTION]

According to an embodiment, a wearable device may comprise a plurality of sensors, a display, memory for storing instructions, and at least one processor for executing the instructions. The at least one processor may be configured to identify a first input with respect to a location separated from all of a plurality of virtual objects by using a first sensor among the plurality of sensors. The at least one processor may be configured to identify, in response to a second input with respect to the location that is identified based on the first sensor within a preset duration after identifying the first input, at least one virtual object among the plurality of virtual objects that is adjacent to the location. The at least one processor may be configured to display a visual object indicating a third input that is corresponding to a function of the at least one virtual object and is identifiable by a second sensor among the plurality of sensors, on the display.

According to an embodiment, a method of a wearable device may comprise identifying a first input with respect to a location separated from all of a plurality of virtual objects by using a first sensor among a plurality of sensors of the wearable device. The method may comprise identifying, in response to a second input with respect to the location that is identified based on the first sensor within a preset duration after identifying the first input, at least one virtual object among the plurality of virtual objects that is adjacent to the location. The method may comprise displaying a visual object indicating a third input that is corresponding to a function of the at least one virtual object and is identifiable by a second sensor among the plurality of sensors, on a display of the wearable device.

According to an embodiment, a wearable device may comprise one or more sensors, a display, memory, and at least one processor. The at least one processor may be configured to obtain, based on identifying a first input with respect to a first location in a virtual space provided through the display by using the one or more sensors, whether a virtual object is identified at the first location. The at least one processor may be configured to execute, in a first state identifying a first virtual object at the first location, a first function, indicated by the first input, assigned to the first virtual object. The at least one processor may be configured to identify, in a second state different from the first state, a second virtual object positioned at a second location in the virtual space adjacent to the first location based on identifying a second input with respect to the first location. The at least one processor may be configured to display a visual object including text for calling a second function that is executable based on the second virtual object on the display.

According to an embodiment, a method of a wearable device may comprise obtaining, based on identifying a first input with respect to a first location in a virtual space provided through a display of the wearable device by using one or more sensors of the wearable device, whether the virtual object is identified at the first location. The method may comprise executing, in a first state identifying a first virtual object at the first location, a first function, indicated by the first input, assigned to the first virtual object. The method may comprise identifying, in a second state different from the first state, a second virtual object positioned at a second location in the virtual space adjacent to the first location based on identifying a second input with respect to the first location. The method may comprise displaying a visual object including text for calling a second function that is executable based on the second virtual object on the display.

### [DESCRIPTION OF THE DRAWINGS]

FIG. 1 illustrates an example user interface (UI) provided by a wearable device according to an embodiment.
FIGS. 2A and 2B illustrate an example of a block diagram of a wearable device according to an embodiment.
FIG. 3 illustrates an example of a flowchart of a wearable device according to an embodiment.
FIG. 4 illustrates an example operation of a wearable device identifying a user input.
FIG. 5 illustrates a UI displayed by a wearable device identifying a user input based on a hand gesture.
FIG. 6 illustrates a UI displayed by a wearable device identifying a user input based on an external electronic device such as a remote controller.
FIG. 7 illustrates a UI displayed by a wearable device identifying a user input based on a gaze.
FIG. 8 illustrates a UI displayed by a wearable device identifying a user input based on a hand gesture.
FIG. 9 illustrates a UI displayed by a wearable device identifying a user input based on a hand gesture.
FIG. 10 illustrates a UI displayed by a wearable device identifying a user input based on a hand gesture.
FIG. 11 illustrates an example of a flowchart of a wearable device according to an embodiment.
FIG. 12 illustrates an example of a flowchart of a wearable device according to an embodiment.
FIG. 13A illustrates an example of a perspective view of a wearable device according to an embodiment.
FIG. 13B illustrates an example of one or more hardware positioned in a wearable device according to an embodiment.
FIGS. 14A to 14B illustrate an example of an exterior of a wearable device according to an embodiment.

### [MODE FOR INVENTION]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, are only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

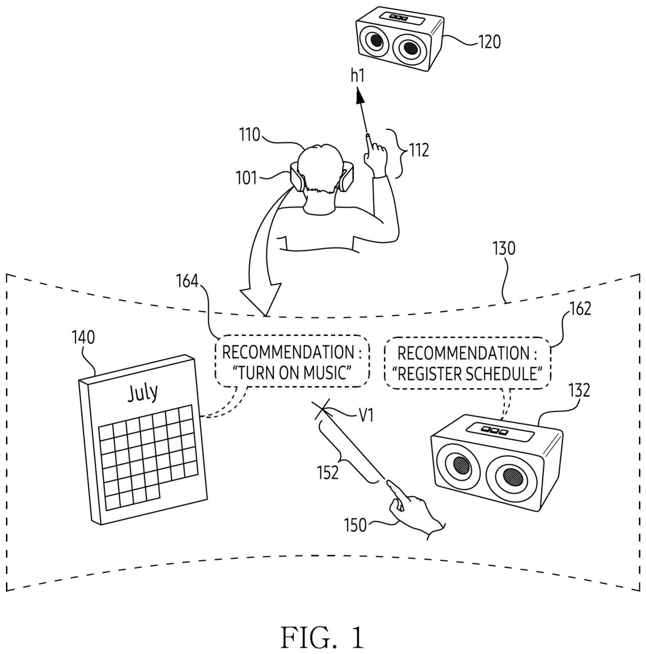

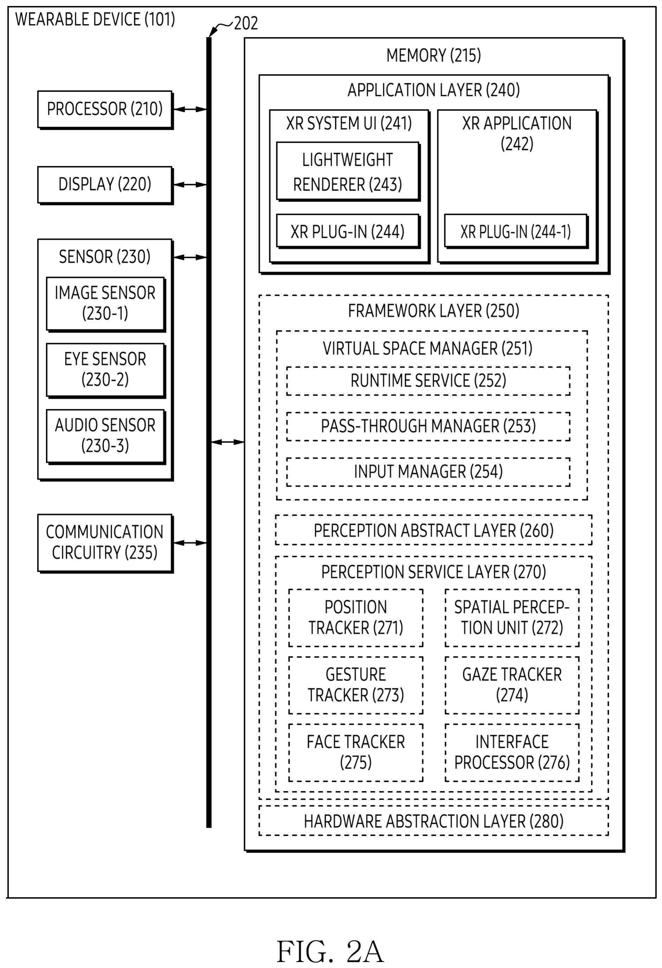

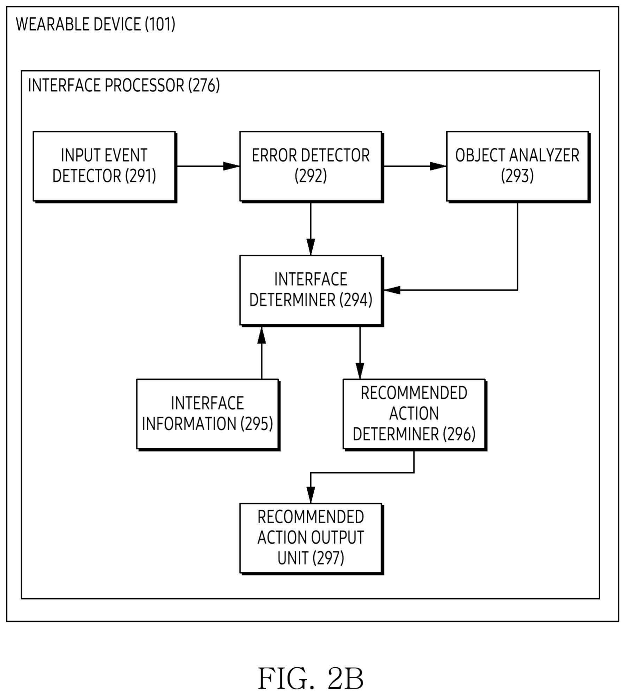

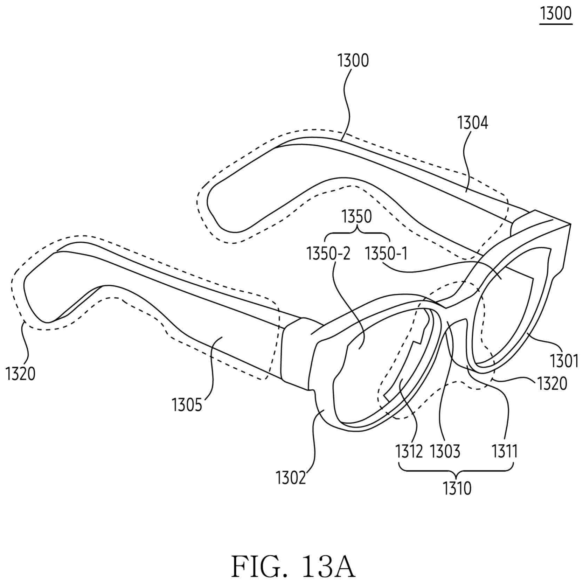

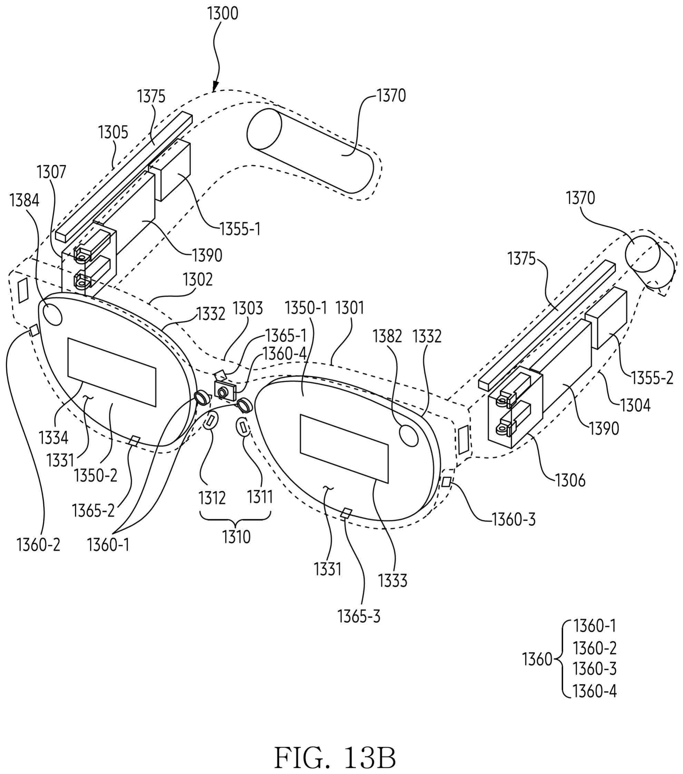

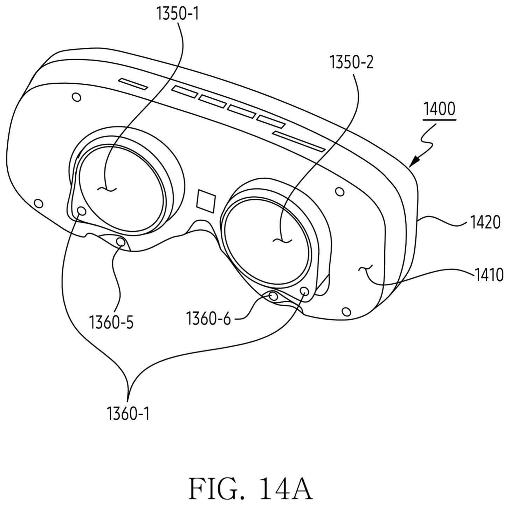

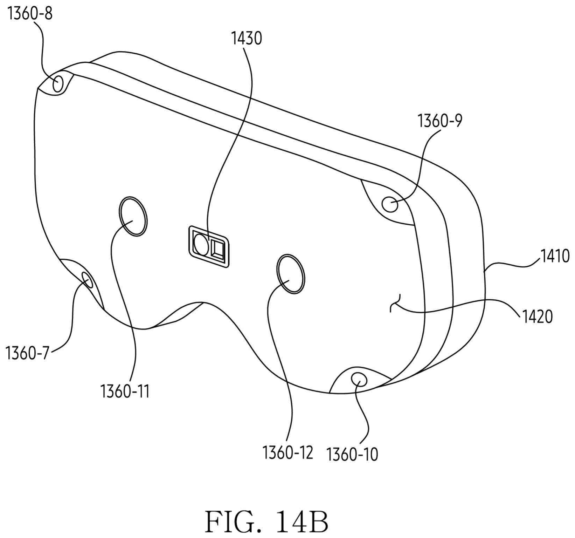

FIG. 1 illustrates an example user interface (UI) provided by a wearable device 101 according to an embodiment. The wearable device 101 may include a head-mounted display (HMD) wearable on a head of a user 110. The wearable device 101 may be referred to as a head- mount device (HMD), a headgear electronic device, a glasses-type electronic device, a video see-through (or visible see-through) (VST) device, an extended reality (XR) device, a virtual reality (VR) device, and/or an augmented reality (AR) device. Although an external appearance of the wearable device 101 having a form of glasses is illustrated, an embodiment is not limited thereto. An example of a hardware configuration included in the wearable device 101 is exemplarily described with reference to FIGS. 2A and/or 2B. An example of a structure of the wearable device 101 wearable on the head of the user 110 will be described with reference to FIGS. 13A, 13B, 14A, and/or 14B. The wearable device 101 may be referred to as an electronic device. For example, the electronic device may form the HMD by being coupled with an accessory (e.g., a strap) to be attached to the head of a user.

According to an embodiment, the wearable device 101 may perform a function related to augmented reality (AR) and/or mixed reality (MR). For example, in a state in which the user 110 wears the wearable device 101, the wearable device 101 may include at least one lens positioned adjacent to an eye of the user 110. The wearable device 101 may combine light emitted from a display of the wearable device 101 with ambient light passing through a lens. A displaying area of the display may be formed in the lens through which the ambient light passes. Since the wearable device 101 combines the ambient light and the light emitted from the display, the user 110 may view an image in which a real object perceived by the ambient light and a virtual object formed by the light emitted from the display are mixed. The above-described augmented reality, mixed reality, and/or virtual reality may be referred to as extended reality (XR).

According to an embodiment, the wearable device 101 may execute a function related to a video see-through (or a visible see-through) (VST) and/or virtual reality (VR). For example, in a state in which the user 110 wears the wearable device 101, the wearable device 101 may include a housing covering the eye of the user 110. In the state, the wearable device 101 may include a display positioned on a first surface of the housing directed toward the eye. The wearable device 101 may include a camera positioned on a second surface opposite to the first surface. By using the camera, the wearable device 101 may obtain an image and/or a video representing ambient light. The wearable device 101 may allow the user 110 to perceive the ambient light through the display, by outputting the image and/or the video in the display positioned on the first surface. A displaying area (or an active area) of the display positioned on the first surface may be formed by one or more pixels included in the display. The wearable device 101 may allow the user 110 to perceive a virtual object together with a real object perceived by the ambient light by synthesizing the virtual object with the image and/or the video outputted through the display.

Referring to FIG. 1, an embodiment of the wearable device 101 that provides the user 110 with an interactable user interface (UI) and/or a user experience (UX) is illustrated. The wearable device 101 may identify a motion (or an action) of the user 110, including a hand gesture of the user 110 (e.g., a gesture performed by a hand 112). Based on the motion of the user 110, the wearable device 101 may estimate an intention of the user 110 with respect to the motion. Based on repeatedly identified motions, the wearable device 101 may display a UI for checking an intention related to the motions.

Referring to FIG. 1, the wearable device 101 may display a screen 130 to the user 110 wearing the wearable device 101. In an embodiment of the wearable device 101 displaying the screen 130 based on the VST, the wearable device 101 may display the screen 130 including a visual object 132 corresponding to a real object (e.g., a speaker 120). The visual object 132 may be a portion of an image and/or a video identified through a camera (e.g., an image sensor 230-1 of FIGS. 2A and/or 2B) directed toward a front direction of the wearable device 101. The wearable device 101 may allow the user 110 wearing the wearable device 101 to perceive a surrounding environment by displaying the screen 130 including the image and/or the video.

In a state displaying the visual object 132 corresponding to the speaker 120, which is the real object, the wearable device 101 may display a virtual object (and/or an imaginary object) 140 in the screen 130. The virtual object 140 may include a graphical object provided by a software application (hereinafter, an application) executed by the wearable device 101. The virtual object 140 may have a form of a two-dimensional panel (or a quadrangle or a rectangular parallelepiped), such as a window (or an activity) provided by the software application. An embodiment is not limited thereto, and the virtual object 140 may have a three-dimensional form based on three-dimensional rendering. Referring to FIG. 1, the virtual object 140 in a form of a calendar provided by a software application (e.g., a calendar application) that supports a calendar-related function is exemplarily illustrated, but an embodiment is not limited thereto.

Referring to FIG. 1, the wearable device 101 may provide the user 110 with mixed reality of the real object (e.g., the speaker 120) and the virtual object 140 by substantially simultaneously displaying the screen 130 including the virtual object 140 and the visual object 132. Based on the mixed reality, the wearable device 101 may support spatial computing. The user 110 viewing the screen 130 may obtain information that may not be identified through an external space by using the virtual object 140 having the form of the calendar. For example, in an external space that includes only the speaker 120, the wearable device 101 may provide the user 110 with a user experience such as viewing the calendar using the virtual object 140 in the screen 130. The wearable device 101 may execute at least one function supported by the software application corresponding to the virtual object 140 based on a user input related to the virtual object 140.

For example, the wearable device 101 may remotely control the speaker 120 based on the screen 130 including the visual object 132 corresponding to the speaker 120, which is the real object. For example, even when the user 110 does not directly manipulate the speaker 120, the wearable device 101 may wirelessly transmit, to the speaker 120, a signal related to a user input related to the visual object 132 based on identifying the user input. According to an embodiment, the wearable device 101 may display an interactable object (e.g., the virtual object 140 and/or the visual object 132).

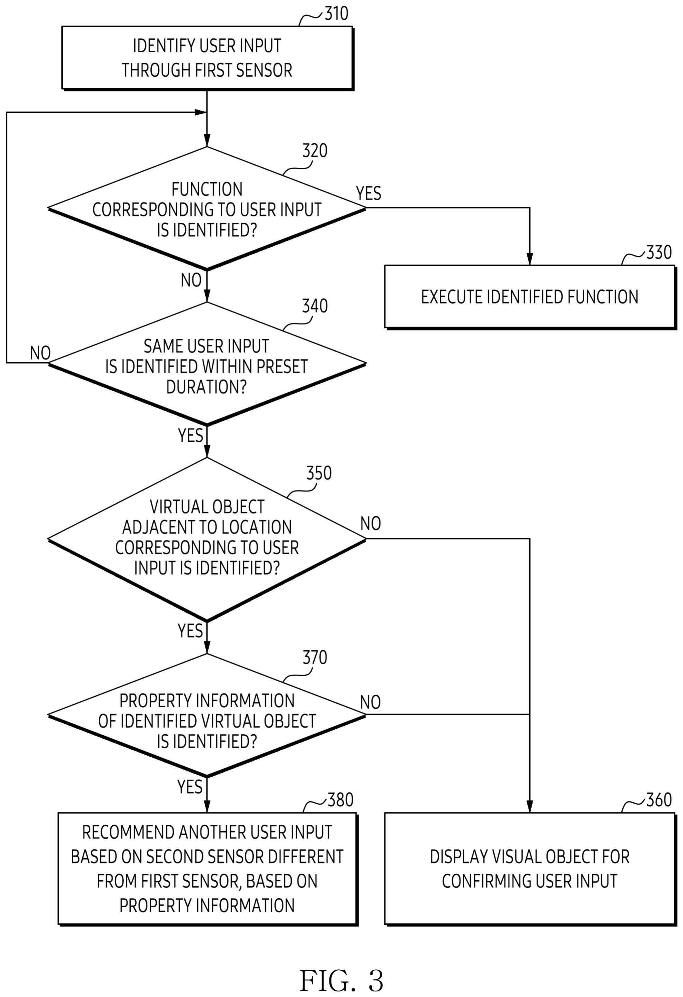

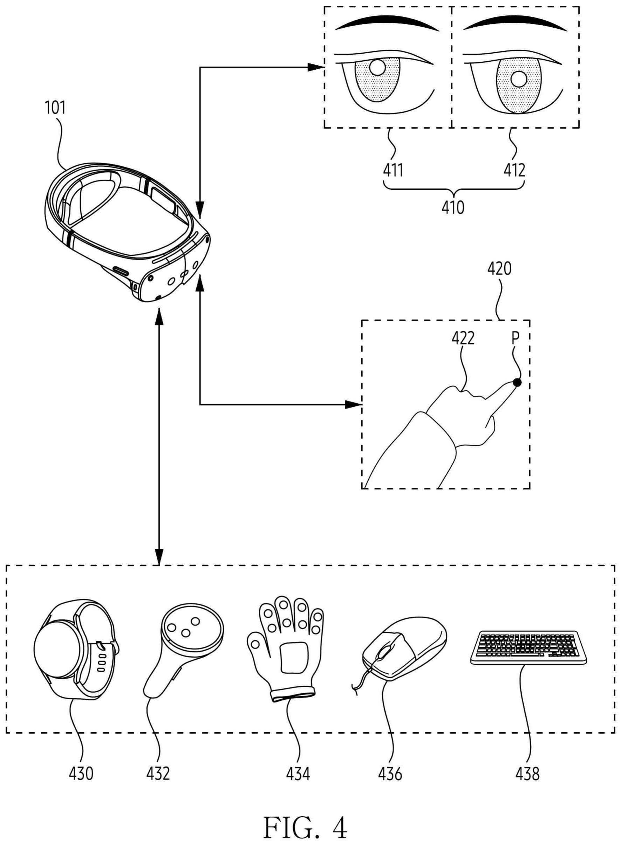

While displaying the interactable object, the wearable device 101 according to an embodiment may execute at least one function corresponding to the interactable object in response to a user input. An example of a hardware configuration of the wearable device 101 for identifying the user input will be described with reference to FIGS. 2A and/or 2B. An operation in which the wearable device 101 identifying the user input executes at least one function related to the interactable object will be described with reference to FIG. 3. Types (e.g., a type and/or a category) of the user input identifiable by the wearable device 101 are described with reference to FIG. 4.

In an embodiment, while displaying a plurality of interactable objects, such as the virtual object 140 and/or the visual object 132 in the screen 130, the wearable device 101 may execute a function of any one object among the plurality of interactable objects based on a user input. The wearable device 101, which identifies a pointing gesture pointing a direction h1 with an index finger performed by the hand 112, may execute a function of any one object located in the direction h1 among the virtual object 140 and/or the visual object 132. Referring to FIG. 1, the wearable device 101 identifying the hand 112 may display a virtual object 150 corresponding to the hand 112 in the screen 130. The wearable device 101 identifying the pointing gesture may display the virtual object 150 having a form corresponding to the pointing gesture and may display a line 152 extending from the virtual object 150 along the direction h1 of the pointing gesture, in the screen 130. The line 152 may be referred to as a ray (or a hand ray). An embodiment is not limited thereto, and the line 152 may be referred to as a cursor and/or a pointer.

In an example state of FIG. 1, the wearable device 101 identifying the pointing gesture may identify a user input for selecting any one of objects (e.g., the virtual object 140 and/or the visual object 132) displayed in the screen 130 based on the direction h1 of the pointing gesture. In a case of identifying any one object located in the direction h1, the wearable device 101 may execute a function mapped to all of the identified object and the pointing gesture. For example, in a case that the direction h1 of the pointing gesture directed toward the virtual object 140 that supports different functions with respect to each of different hand gestures is identified, the wearable device 101 may execute a specific function of the virtual object 140 corresponding to the pointing gesture. In a case that no object is located in the direction h1, the wearable device 101 may not execute any function assigned to the objects in the screen 130.

The user 110 may perform the pointing gesture to interact with any one of the objects (e.g., the virtual object 140 and/or the visual object 132) displayed in the screen 130. In a case that the user 110 incorrectly performs the pointing gesture, the wearable device 101 may execute a function different from the intention of the user 110 or may not execute any function, in response to the pointing gesture. In a case that the function different from the intention of the user 110 is executed, the user 110 may additionally perform a user input for canceling the execution of the function. In a case that no function is executed, the user 110 may perform the pointing gesture again. According to an embodiment, the wearable device 101 may perform an operation for more accurately identifying the intention of the user 110 based on the user input for canceling execution of a function and/or repeatedly performed user inputs (particularly, identified while executing no function).

Referring to FIG. 1, the wearable device 101, which identifies a pointing gesture directed toward the direction h1 and/or a location v1 separated from all of the objects (e.g., the virtual object 140 and/or the visual object 132) displayed in the screen 130, may not execute any function since the pointing gesture does not overlap with any object. In a case of additionally identifying a pointing gesture based on the direction h1 and/or the location v1, the wearable device 101 may request to perform a motion different from the pointing gesture in order to more accurately identify the intention of the user 110. For example, in a state in which no function is executed despite repeatedly performing pointing gestures, the wearable device 101 may guide the user 110 to perform a motion of a type different from the pointing gesture. For example, the wearable device 101 may display visual objects 162 and 164 guiding a voice input in the screen 130 based on the pointing gestures that are identified repeatedly and do not correspond to any function.

Referring to FIG. 1, the wearable device 101 may display the visual objects 162 and 164 corresponding to each of the interactable objects (e.g., the virtual object 140 and/or the visual object 132). The visual objects 162 and 164 having bubble forms and displayed in locations in the screen 130 adjacent to each of the virtual object 140 and the visual object 132 are exemplarily illustrated, but an embodiment is not limited thereto. The wearable device 101 may display text (e.g., "turn on the music") related to an executable function related to a real object (e.g., the speaker 120) corresponding to the visual object 132 in the visual object 162 displayed adjacent to the visual object 132. The wearable device 101 may display text (e.g., "register a schedule") for calling a function supported by the virtual object 140 in the visual object 164 displayed adjacent to the virtual object 140.

By using the visual objects 162 and 164, the wearable device 101 may recommend a voice input to the user 110 as a user input instead of a hand gesture such as a pointing gesture. In a state in which the visual objects 162 and 164 are displayed, the wearable device 101 may identify speech of the user 110 through an audio sensor such as a microphone. By performing speech-to-text (STT) on the speech, the wearable device 101 may obtain text corresponding to the speech. Based on a natural language sentence indicated by the text, the wearable device 101 may identify a voice input indicated by the speech. For example, the wearable device 101 may perform voice recognition by executing a function for processing or analyzing the natural language sentence (e.g., natural language understating (NLU)). The wearable device 101 may execute a function corresponding to the voice input confirmed based on the voice recognition. For example, the user 110 browsing the visual objects 162 and 164 through the screen 130 may read the text included in the visual object 164, such as "register a schedule". The wearable device 101 identifying the text based on the audio sensor may execute the function of the virtual object 140 (e.g., schedule registration). Similarly, the wearable device 101, which identifies a voice input corresponding to the text included in the visual object 162 such as "turn on the music", may execute the function corresponding to the text (e.g., playing music) by controlling the speaker 120 corresponding to the visual object 162.

As described above, the wearable device 101 according to an embodiment may identify a first input with respect to the location v1 separated from all of a plurality of objects (e.g., the virtual object 140 and/or the visual object 132), by using a first sensor (e.g., an image sensor for identifying the hand 112). Based on the first input, the wearable device 101 may not execute any function. In response to a second input with respect to the location v1 identified based on the first sensor within a preset duration after identifying the first input, the wearable device 101 may display a visual object (e.g., the visual objects 162 and 164) related to a function of at least one virtual object among the plurality of objects. In an embodiment, by using the visual object, the wearable device 101 may display a visual object indicating a third input (e.g., a voice input) identifiable by a second sensor (e.g., an audio sensor including one or more microphones) different from the first sensor. By using the visual object, the wearable device 101 may cause the user 110 to perform a user input related to the second sensor by recommending the third input identifiable through the second sensor distinct from the first sensor. By using the second sensor, the wearable device 101 may more accurately identify the intention of the user 110 performing the first input and/or the second input.

Hereinafter, an example of a hardware configuration included in the wearable device 101 to perform an operation described with reference to FIGS. 2A and/or 2B will be described.

FIGS. 2A and 2B illustrate an example of a block diagram of a wearable device 101 according to an embodiment. The wearable device 101 described with reference to FIG. 1 may include at least one of hardware components of the wearable device 101 distinguished by different blocks of FIGS. 2A and/or 2B.

Referring to FIG. 2A, the wearable device 101 according to an embodiment may include at least one of a processor 210, memory 215, a display 220, a sensor 230, or communication circuitry 235. The processor 210, the memory 215, the display 220, the sensor 230, and/or the communication circuitry 235 may be electrically and/or operably coupled with each other by an electronic component such as a communication bus 202. A type and/or the number of hardware components included in the wearable device 101 is not limited to those illustrated in FIG. 2A. For example, the wearable device 101 may include only some of the hardware components illustrated in FIG. 2A.

The processor 210 of the wearable device 101 according to an embodiment may include a hardware component for processing data based on one or more instructions. The hardware component for processing data may include, for example, an arithmetic and logic unit (ALU), a field programmable gate array (FPGA), a central processing unit (CPU), and/or an application processor (AP). In an embodiment, the wearable device 101 may include one or more processors. The processor 210 may have a structure of a multi-core processor such as a dual core, a quad core, a hexa core, and/or an octa core.

The memory 215 of the wearable device 101 according to an embodiment may include a hardware component for storing data and/or instructions inputted to the processor 210 and/or outputted from the processor 210. The memory 215 may include, for example, a volatile memory, such as a random-access memory (RAM), and/or a non-volatile memory, such as a read-only memory (ROM). The volatile memory may include, for example, at least one of a dynamic RAM (DRAM), a static RAM (SRAM), a Cache RAM, and a pseudo SRAM (PSRAM). The non-volatile memory may include, for example, at least one of a programmable ROM (PROM), a erasable PROM (EPROM), an electrically erasable PROM (EEPROM), a flash memory, a hard disk, a compact disc, and an embedded multimedia card (eMMC). In an embodiment, the memory 215 may be referred to as storage.

In an embodiment, the display 220 of the wearable device 101 may output visualized information (e.g., the screen 130 of FIG. 1) to a user (e.g., the user 110 of FIG. 1) of the wearable device 101. For example, the display 220 may be configured to visualize information provided from the processor 210 including circuitry such as a graphic processing unit (GPU). The display 220 may include a flexible display, a flat panel display (FPD), and/or electronic paper. The FPD may include a liquid crystal display (LCD), a plasma display panel (PDP), and/or one or more light emitting diodes (LEDs). The LED may include an organic LED (OLED). An embodiment is not limited thereto, and for example, in a case that the wearable device 101 includes a lens for transmitting external light (or ambient light), the display 220 may include a projector (or a projection assembly) for projecting light onto the lens. In an embodiment, the display 220 may be referred to as a display panel and/or a display module.

According to an embodiment, the sensor 230 of the wearable device 101 may generate electronic information that may be processed and/or stored by the processor 210 and/or the memory 215 of the wearable device 101 from non-electronic information related to the wearable device 101. The information may be referred to as sensor data. The sensor 230 may include a global positioning system (GPS) sensor for detecting a geographic location of the wearable device 101, an image sensor, an illuminance sensor, and/or a time-of-flight (ToF) sensor (or a ToF camera), and an inertial measurement unit (IMU) (e.g., an accelerometer, a geomagnetic sensor, a gravity sensor, or any combination thereof) for detecting a physical motion of the wearable device 101.

Referring to FIG. 2A, the sensor 230 may include an image sensor 230-1, an eye sensor 230-2, an audio sensor 230-3, or any combination thereof. The image sensor 230-1 may include one or more optical sensors (e.g., a charged coupled device (CCD) sensor, a complementary metal oxide semiconductor (CMOS) sensor) that generate an electrical signal indicating a color and/or brightness of light. The image sensor 230-1 may be referred to as a camera and may be included in the sensor 230 of FIG. 2A. The plurality of optical sensors included in the image sensor 230-1 may be positioned in a form of a two-dimensional grid. The image sensor 230-1 may generate two-dimensional frame data corresponding to light reaching the optical sensors of the two-dimensional grid by obtaining electrical signals of each of the plurality of optical sensors substantially simultaneously. For example, photo data captured using the image sensor 230-1 may mean a two-dimensional frame data obtained from the image sensor 230-1. For example, video data captured using the image sensor 230-1 may mean a sequence of a plurality of two-dimensional frame data obtained from the image sensor 230-1 according to a frame rate. The image sensor 230-1 may further include a flash light, positioned toward a direction in which the image sensor 230-1 receives light, for outputting light toward the direction.

According to an embodiment, the image sensor 230-1 of the wearable device 101 may be positioned toward a front direction (e.g., a direction in which two eyes may be directed) of the user wearing the wearable device 101. By using an image and/or a video obtained from the image sensor 230-1, the processor 210 may identify an external object (e.g., the speaker 120 of FIG. 1). An embodiment is not limited thereto, and the processor 210 may identify a position, a shape, and/or a gesture (e.g., a hand gesture) of a hand (e.g., the hand 112 of FIG. 1) based on the image and/or the video obtained from the image sensor 230-1. A sensor included in the wearable device 101 to identify an external object is not limited to the image sensor 230-1. For example, in order to identify an external object, the wearable device 101 may include a light detection and ranging (LiDAR) and a depth sensor (and/or a depth camera).

Referring to FIG. 2A, the eye sensor 230-2 may be configured to be positioned toward at least one of two eyes of the user while being worn by the user (e.g., the user 110 of FIG. 1). The eye sensor 230-2 may include one or more optical sensors. An embodiment is not limited thereto, and the eye sensor 230-2 may include an infrared (IR) sensor for obtaining an image and/or a video of at least one of the two eyes of the user based on an infrared wavelength band and/or an IR light source synchronized with the IR sensor. For example, based on the image and/or the video identified using the eye sensor 230-2, the processor 210 may identify a direction of at least one of the two eyes. The eye sensor 230-2 may be referred to as a gaze tracker and/or an eye tracker.

Referring to FIG. 2A, the audio sensor 230-3 may output an electrical signal indicating vibration in an atmosphere. The audio sensor 230-3 may include at least one microphone. For example, in a case that the audio sensor 230-3 includes a plurality of microphones, the plurality of microphones may be arranged in a form of an array (e.g., a microphone array). An embodiment is not limited thereto, and the plurality of microphones may be positioned in locations of the wearable device 101 separated from each other.

In an embodiment, the communication circuitry 235 of the wearable device 101 may include circuitry for supporting transmission and/or reception of an electrical signal between the wearable device 101 and an external electronic device. The external electronic device capable of communicating with the wearable device 101 may include the speaker 120 of FIG.1 and/or external electronic devices described with reference to FIG. 4. The communication circuitry 235 may include, for example, at least one of a MODEM, an antenna, or an optic/electronic (O/E) converter. The communication circuitry 235 may support transmission and/or reception of an electrical signal based on various types of protocols, such as Ethernet, local area network (LAN), wide area network (WAN), wireless fidelity (WiFi), Bluetooth, Bluetooth Low Energy (BLE), ZigBee, long term evolution (LTE), 5G new radio (NR), 6G, and/or above-6G. In an embodiment, the communication circuitry 235 may be referred to as a communication processor and/or a communication module.

According to an embodiment, one or more instructions (or commands) indicating data to be processed, and a calculation and/or an operation to be performed by the processor 210 of the wearable device 101 may be stored in the memory 215 of the wearable device 101. A set of one or more instructions may be referred to as firmware, an operating system, a process, a routine, a sub-routine, and/or a software application (hereinafter, an application). For example, the wearable device 101 and/or processor 210 may perform at least one of operations of FIG. 3, and FIGS. 11 to 12, when a set of a plurality of instructions distributed in a form of an operating system, firmware, a driver, and/or an application is executed. Hereinafter, an application being installed in the wearable device 101 may mean that one or more instructions provided in a form of an application are stored in the memory 215, and that the one or more applications are stored in a format (e.g., a file having an extension preset by an operating system of the wearable device 101) executable by the processor 210. As an example, an application may include a program and/or a library related to a service provided to the user.

Referring to FIG. 2A, programs installed in the wearable device 101 may be classified into any one layer among different layers including an application layer 240, a framework layer 250, and/or a hardware abstraction layer (HAL) 280, based on a target. For example, programs (e.g., a module or a driver) designed to target hardware (e.g., the display 220 and/or the sensor 230) of the wearable device 101 may be classified in the hardware abstraction layer 280. The framework layer 250 may be referred to as an XR framework layer in terms of including one or more programs for providing an extended reality (XR) service. For example, layers illustrated in FIG. 2A may be distinguished logically (or for convenience of explanation) and this is mean that an address space of the memory 215 is distinguished by the layers.

For example, in the framework layer 250, programs (e.g., a position tracker 271, a spatial perception unit 272, a gesture tracker 273, a gaze tracker 274, a face tracker 275, and/or an interface processor 276) designed to target at least one of the hardware abstraction layer 280 and/or the application layer 240 may be classified. The programs classified as the framework layer 250 may provide an application programming interface (API) executable based on another program.

For example, in the application layer 240, a program designed to target the user of the wearable device 101 may be classified. As an example of the programs classified as the application layer 240, an extended reality (XR) system user interface (UI) 241 and/or an XR application 242 are exemplified, but an embodiment is not limited thereto. For example, the programs (e.g., a software application) classified as the application layer 240 may cause execution of a function supported by the programs classified as the framework layer 250 by calling an application programming interface (API).

For example, based on execution of the XR system UI 241, the wearable device 101 may display, on the display 220, one or more visual objects to perform interaction with a user for using a virtual space. The visual object may mean an object deployable in a screen for information transmission and/or interaction, such as text, an image, an icon, a video, a button, a checkbox, a radio button, a text box, a slider, and/or a table. The visual object may be referred to as a visual guide, a virtual object, a visual element, a UI element, a view object, and/or a view element. The wearable device 101 may provide functions available in the virtual space to the user based on the execution of the XR system UI 241.

Referring to FIG. 2A, it is illustrated that a lightweight renderer 243 and/or an XR plug-in 244 are included in the XR system UI 241, but is not limited thereto. For example, based on the XR system UI 241, the processor 210 may execute the lightweight renderer 243 and/or the XR plug-in 244 in the framework layer 250.

For example, the wearable device 101 may obtain a resource (e.g., an API, a system process, and/or a library) used to define, generate, and/or execute a rendering pipeline in which a partial change is allowed, based on the execution of the lightweight renderer 243. The lightweight renderer 243 may be referred to as a lightweight render pipeline in terms of defining the rendering pipeline in which the partial change is allowed. The lightweight renderer 243 may include a renderer (e.g., a prebuilt renderer) built before execution of a software application. For example, the wearable device 101 may obtain a resource (e.g., an API, a system process, and/or a library) used to define, generate, and/or execute an entire rendering pipeline based on the execution of the XR plug-in 244. The XR plug-in 244 may be referred to as an open XR native client in terms of defining (or setting) the entire rendering pipeline.

For example, the wearable device 101 may display, on the display 220, a screen indicating at least a portion of a virtual space based on execution of the XR application 242. An XR plug-in 244-1 included in the XR application 242 may include instructions that support a function similar to that of the XR plug-in 244 of the XR system UI 241. Among descriptions of the XR plug-in 244-1, descriptions overlapping descriptions of the XR plug-in 244 may be omitted. The wearable device 101 may cause execution of a virtual space manager 251 based on execution of the XR application 242.

According to an embodiment, the wearable device 101 may provide a virtual space service based on the execution of the virtual space manager 251. For example, the virtual space manager 251 may include a platform for supporting the virtual space service. Based on the execution of the virtual space manager 251, the wearable device 101 may identify a virtual space formed based on a position of the user indicated by data obtained through the sensor 230, and may display at least a portion of the virtual space on the display 220. The virtual space manager 251 may be referred to as a composition presentation manager (CPM).

For example, the virtual space manager 251 may include a runtime service 252. As an example, the runtime service 252 may be referred to as an OpenXR runtime module (or an OpenXR runtime program). Based on execution of the runtime service 252, the wearable device 101 may execute at least one of a user pose prediction function, a frame timing function, and/or a spatial input function. As an example, the wearable device 101 may perform rendering for the virtual space service to the user based on the execution of the runtime service 252. For example, based on the execution of the runtime service 252, a function related to a virtual space executable by the application layer 240 may be supported.

For example, the virtual space manager 251 may include a pass-through manager 253. While displaying a screen indicating a virtual space on the display 220, the wearable device 101 may overlappingly display another screen indicating a real space obtained through the image sensor 230-1 on at least a portion of the screen, based on execution of the pass-through manager 253.

For example, the virtual space manager 251 may include an input manager 254. Based on execution of the input manager 254, the wearable device 101 may identify data (e.g., sensor data) obtained by executing one or more programs included in a perception service layer 270. The wearable device 101 may identify a user input related to the wearable device 101 by using the obtained data. The user input may be related to a motion (e.g., a hand gesture), a gaze, and/or speech of the user identified by the sensor 230.

For example, the perception abstract layer 260 may be used for data exchange between the virtual space manager 251 and the perception service layer 270. In terms of being used for data exchange between the virtual space manager 251 and the perception service layer 270, the perception abstract layer 260 may be referred to as an interface. As an example, the perception abstract layer 260 may be referenced as OpenPX. The perception abstract layer 260 may be used for a perception client and a perception service.

According to an embodiment, the perception service layer 270 may include one or more programs for processing data obtained from the sensor 230 (e.g., the image sensor 230-1 and/or the eye sensor 230-2). The one or more programs may include at least one of the position tracker 271, the spatial perception unit 272, the gesture tracker 273, the gaze tracker 274, the face tracker 275, and/or the interface processor 276. A type and/or the number of the one or more programs included in the perception service layer 270 is not limited to those illustrated in FIG. 2A.

For example, based on execution of the position tracker 271, the wearable device 101 may identify a posture of the wearable device 101 using the sensor 230. Based on the execution of the position tracker 271, the wearable device 101 may identify a 6 degrees of freedom pose (6 dof pose) of the wearable device 101 by using data obtained using the image sensor 230-1 and/or the IMU. The position tracker 271 may be referred to as a head tracking (HeT) module (or a head tracking program).

For example, based on the execution of the spatial perception unit 272, the wearable device 101 may obtain information for providing a three-dimensional virtual space corresponding to a surrounding environment (e.g., an external space) of the wearable device 101 (or the user of the wearable device 101). Based on the execution of the spatial perception unit 272, the wearable device 101 may reconstruct the surrounding environment of the wearable device 101 in 3 dimensions by using data obtained using the image sensor 230-1. The wearable device 101 may identify at least one of a plane, an inclination, and a step based on the surrounding environment of the wearable device 101 reconstructed in 3 dimensions based on the execution of the spatial perception unit 272. The spatial perception unit 272 may be referred to as a scene understanding (SU) module (or a scene perception program).

For example, the wearable device 101 may identify (or perceive) a pose and/or a gesture of the hand of the user of the wearable device 101 based on execution of the gesture tracker 273. As an example, based on the execution of the gesture tracker 273, the wearable device 101 may identify the pose and/or the gesture of the hand of the user by using data obtained from the image sensor 230-1. As an example, based on the execution of the gesture tracker 273, the wearable device 101 may identify the pose and/or the gesture of the hand of the user based on the data (or an image) obtained using the image sensor 230-1. The gesture tracker 273 may be referred to as a hand tracking (HaT) module (or a hand tracking program) and/or a gesture tracking module.

For example, the wearable device 101 may identify (or track) movement of an eye of the user of the wearable device 101 based on execution of the gaze tracker 274. As an example, the wearable device 101 may identify the movement of the eye of the user by using data obtained from the eye sensor 230-2 based on the execution of the gaze tracker 274. The gaze tracker 274 may be referred to as an eye tracking (ET) module (or an eye tracking program) and/or a gaze tracking module.

For example, the perception service layer 270 of the wearable device 101 may further include the face tracker 275 for tracking a face of the user. For example, the wearable device 103 may identify (or track) movement of the face of the user and/or facial expression of the user based on execution of the face tracker 275. Based on the execution of the face tracker 275, the wearable device 101 may estimate the facial expression of the user based on the movement of the face of the user. As an example, based on the execution of the face tracker 275, the wearable device 101 may identify the movement of the face of the user and/or the facial expression of the user based on data (e.g., an image) obtained using the sensor 230 (e.g., an image sensor directed toward at least a portion of the face of the user).

According to an embodiment, the processor 210 of the wearable device 101 may process a user input by executing the interface processor 276. For example, in a state in which the interface processor 276 is executed, the processor 210 may identify a user input identified by the gesture tracker 273 and/or the gaze tracker 274. The processor 210 may identify an input event of a software application executed by the processor 210 based on the user input. Based on the input event, the processor 210 may execute instructions (e.g., an event handler) corresponding to the input event among instructions of the software application.

According to an embodiment, based on the interface processor 276, the processor 210 of the wearable device 101 may identify a user input for interacting with a virtual object provided by another program, such as the virtual space manager 251. In a case that no function is executed based on the user input, the processor 210 may display a visual object (e.g., the visual objects 162 and 164 of FIG. 1) for guiding another user input of a type different from the user input based on the interface processor 276. Hereinafter, with reference to FIG. 2B, one or more instructions and/or programs related to the interface processor 276 described with reference to FIG. 2A will be described.

Referring to FIG. 2B, instructions and/or programs included in the interface processor 276 are illustrated as being distinguished into different blocks according to a corresponding function. The interface processor 276 may include an input event detector 291, an error detector 292, an object analyzer 293, an interface determiner 294, a recommended action determiner 296, and/or a recommended action output unit 297. The interface processor 276 may include interface information 295 related to at least one (e.g., the interface determiner 294) of the above-described programs.

Based on execution of the input event detector 291, a processor (e.g., the processor 210 of FIG. 2A) of the wearable device 101 may detect a user input. For example, the wearable device 101 may identify an input event related to the user input. The wearable device 101 may identify the input event and/or a type of the user input (e.g., a hand gesture, a touch input, a gaze input, a voice input, and/or a remote input by an external electronic device such as a remote controller). The wearable device 101 may identify a software application related to the input event and/or a coordinate value related to the input event (e.g., a three-dimensional coordinate value in a virtual space and/or an external space managed by the wearable device 101).

Based on execution of the error detector 292, the processor of the wearable device 101 may identify an error of the user input and/or the input event identified by the input event detector 291. Based on the execution of the error detector 292, the processor of the wearable device 101 may identify whether the user input is an input intended by the user. The processor of the wearable device 101 may identify the error of the user input by comparing three-dimensional coordinates of a location where the user input is identified with three-dimensional coordinates of a virtual object (e.g., the virtual object 140 of FIG. 1) provided by the wearable device 101. For example, the error may occur in a case that a location where the input event is identified is separated from all of interactable objects (e.g., the virtual object 140 and/or the visual object 132 of FIG. 1) provided by the wearable device 101. For example, based on the user input, the error may occur in a case that no function supported by an interactable object (e.g., the virtual object 140 and/or the visual object 132 of FIG. 1) provided by the wearable device 101 is executed.

Based on the execution of the error detector 292, the wearable device 101 may identify reliability of a hand gesture identified by the input event detector 291. The reliability may include probabilities that the hand gesture corresponds to any one of preset gestures (e.g., a pointing gesture, a pinch gesture, and/or a grab gesture) and/or may be determined by the probabilities. The wearable device 101 may identify an error of the hand gesture by comparing each of the probabilities with a threshold probability.

Based on the execution of the error detector 292, the wearable device 101 may identify repeatedly performed user inputs and/or input events. In a case that input events occur repeatedly within a preset duration (e.g., several seconds) but the input events are not associated with any virtual objects provided by the wearable device 101, the wearable device 101 may generate an error based on the error detector 292.

Based on the occurrence of the error by the error detector 292, the wearable device 101 may generate error information related to the repeatedly generated input events. The error information may include three-dimensional coordinates of the input events. The error information may include a sensor (e.g., the sensor 230 of FIG. 2A) used to identify the input events and/or types of the input events. For example, the wearable device 101 detecting an error of an input event generated by the hand gesture may generate error information indicating the occurrence of the error based on the hand gesture. For example, the wearable device 101 detecting an error generated by a voice input may generate error information indicating that the error was generated by the voice input. For example, in a case that an error is generated by a gaze input, the wearable device 101 may generate error information including three-dimensional coordinates of a direction of the gaze input and/or a location related to the gaze input and/or a parameter (e.g., a constant and/or a flag) indicating the error based on the gaze input. The error information may be referred to as error log information.

By using the error information obtained based on the execution of the error detector 292, the wearable device 101 may execute the object analyzer 293 and/or the interface determiner 294. For example, based on the execution of the object analyzer 293 and/or the interface determiner 294, the wearable device 101 may process the error information.

Based on the execution of the object analyzer 293, the wearable device 101 may identify at least one virtual object adjacent to an input event based on error information. For example, based on three-dimensional coordinate values assigned to a plurality of virtual objects and three-dimensional coordinate values of a location where the input event is identified, the wearable device 101 may identify distances between the plurality of virtual objects and the location. Based on the distances, the wearable device 101 may identify the at least one virtual object positioned adjacent to the location where the input event occurs.

For example, the wearable device 101 may identify the at least one virtual object adjacent to the location by scanning an external space and/or a virtual space in 3 dimensions based on the location where the input event is identified. For example, the wearable device 101 may identify the at least one virtual object adjacent to the location, by using a scan area in a form of a three-dimensional sphere having the location as a center. While gradually enlarging the scan area, the wearable device 101 may identify one or more virtual objects included in the scan area. The wearable device 101 may enlarge the scan area until the preset number (e.g., 1 to 3) of virtual objects are included in the scan area. An embodiment is not limited thereto, and the scan area may have a preset radius.

The wearable device 101 identifying the at least one virtual object adjacent to the location related to the user input and/or the input event may identify and/or analyze property information of the at least one virtual object. The property information may include a software application providing the corresponding virtual object, layout, and/or UI information (e.g., whether it includes a visual object such as a button, a text input, a date picker, a slider, and/or a check box). The property information may include a flag and/or a parameter indicating whether the virtual object is a three-dimensional rendered object (or a two-dimensional rendered object). The property information may include information on one or more functions executable by the at least one virtual object and/or information on a user input mapped to the one or more functions.

Based on the execution of the interface determiner 294, the wearable device 101 may determine a type of user input to be recommended to the user based on the error information generated by the error detector 292, the property information identified by the object analyzer 293, and/or the interface information 295. The interface information 295 may indicate a type of a user input and/or an input event identifiable by the wearable device 101. For example, the interface information 295 may include whether the wearable device 101 may detect a hand gesture, whether the wearable device 101 may track a gaze of the user, whether the wearable device 101 may identify a voice input, and/or parameters and/or data for one or more external electronic devices (e.g., a remote controller) connected to the wearable device 101.

For example, in a case that an error for a first user input (e.g., a gaze input based on a direction of a gaze of the user) based on a first sensor (e.g., the eye sensor 230-2 of FIG. 2A) is detected, the wearable device 101 may identify a second sensor (e.g., the image sensor 230-1 and/or the audio sensor 230-3 of FIG. 2A) to be used for receiving and/or identifying a second user input of a type different from the first user input, based on the execution of the interface determiner 294. The wearable device 101 may identify the second sensor based on property information of at least one virtual object adjacent to a location related to the first user input.

Based on execution of the recommended action determiner 296, the wearable device 101 may determine a user input to be recommended to the user in the type determined by the interface determiner 294. For example, in a case of recommending a user input based on a voice input, the wearable device 101 may obtain a natural language sentence to be recommended (or guided) to the user based on the execution of the recommended action determiner 296. For example, in a case of recommending a hand gesture to the user, the wearable device 101 may obtain a form of the hand gesture to be recommended to the user.

Based on execution of the recommended action output unit 297, the wearable device 101 may display, on a display (e.g., the display 220 of FIG. 2A), a visual object (e.g., the visual objects 162 and 164 of FIG. 1) indicating the user input determined by the execution of the recommended action determiner 296.

In an embodiment, the wearable device 101 may determine a type of user input to be recommended to the user based on Table 1.

**[Table 1]**

| Type of user input | Property information of virtual object | Type of user input supported by virtual object | Type recommended to user |
|---|---|---|---|
| Remote controller (or gesture controller) Gaze and hand gesture | two-dimensional object - support z axis input | Vertical touch (e.g., press), button input | Voice input |
| | 2-dimensional object - support x and y-axis input | Continuously adjustable value (slider, and the like) | External electronic device (e.g., watch and/or phone) |
| | three-dimensional object (including window having depth value) | Dimensionless manipulation (rotation input, and the like.) | Hand gesture and/or remote controller |
| | Real object | N/A | N/A |
| Voice input | two-dimensional object - support z-axis input | Voice input including text, hover, and selection gesture | Hand gesture and/or remote controller |
| | two-dimensional object - support x and y-axis input | Voice input related to input | External electronic device (e.g., watch and/or phone) |
| | three-dimensional object (including window having depth value) | Voice input related to input | Hand gesture and/or controller |
| | Real object | Voice input related to real object | Voice input related to real object |

Table 1 is exemplary and The present disclosure is not limited to the above example embodiment. For example, in a case that an error of an input event based on the remote controller is identified, the wearable device 101 may identify property information of a virtual object adjacent to the input event. The wearable device 101 identifying the two-dimensional virtual object supporting x and y-axis input by the property information may recommend the user input based on the external electronic device (e.g., the watch and/or the mobile phone) connected to the wearable device 101 based on Table 1. For example, in a case that an error of the user input based on the combination of the gaze and the hand gesture is identified and the three-dimensional virtual object adjacent to the user input is identified, the wearable device 101 may recommend the user input based on the hand gesture and/or the remote controller connected to the wearable device 101 based on Table 1.

As described above, based on repeated input events and errors generated by the input events, the wearable device 101 according to an embodiment may guide or recommend a user input of a type different from a type of the input events. For example, based on a user input at a location separated from an interactable object provided by the wearable device 101, the wearable device 101 may display a UI for receiving another user input of a type different from the user input based on property information of the object. Based on the UI, the user may perform an intended input more accurately.

Hereinafter, with reference to FIG. 3, an example operation of the wearable device 101 described with reference to FIGS. 1, 2A, and/or 2B will be described.

FIG. 3 illustrates an example of a flowchart of a wearable device according to an embodiment. The wearable device 101 of FIGS. 1, 2A, and 2B and/or the processor 210 of FIG. 2A may perform an operation of the wearable device described with reference to FIG. 3. The operation of the wearable device described with reference to FIG. 3 may be related to the interface processor 276 of FIG. 2A.

Referring to FIG. 3, in operation 310, a processor of the wearable device according to an embodiment may identify a user input through a first sensor. The wearable device may identify a user input of the operation 310 while displaying one or more interactable objects (e.g., the virtual object 140 and/or the visual object 132 of FIG. 1). For example, the interactable object may be provided by the wearable device (e.g., provided by a software application executed by the wearable device), such as the virtual object 140 of FIG. 1, and may be associated with a location of a virtual space. The interactable object may be associated with a location of a real object (e.g., the speaker 120 of FIG. 1) identified by the wearable device, such as the visual object 132 of FIG. 1.

The first sensor of the operation 310 may be included in the sensor 230 of FIGS. 2A and/or 2B. For example, the wearable device may identify a user input based on a hand gesture using an image sensor (e.g., the image sensor 230-1 of FIGS. 2A and/or 2B). For example, the wearable device may identify a user input based on a gaze using an eye sensor (e.g., the eye sensor 230-2 of FIGS. 2A and/or 2B). In the example, the wearable device may identify a user input based on a combination of a direction of the gaze and the hand gesture identified by the image sensor. For example, the wearable device may identify a voice input based on speech of a user using an audio sensor (e.g., the audio sensor 230-3 of FIGS. 2A and/or 2B). The present disclosure is not limited to the above example embodiment. In an embodiment, the wearable device 101 may identify a user input identified by an external electronic device (e.g., a remote controller) connected to the wearable device 101 using communication circuitry (e.g., the communication circuitry 235 of FIGS. 2A and/or 2B).

Referring to FIG. 3, in operation 320, the processor of the wearable device according to an embodiment may determine whether a function corresponding to a user input has been identified. While displaying one or more virtual objects, the processor identifying the user input of the operation 310 may identify a virtual object corresponding to the user input. Among functions supported by the virtual object, the processor may identify a function corresponding to the user input. In a case that the virtual object and/or the function corresponding to the user input is identified (320-YES), the processor may perform operation 330. In a case that all the virtual object and the function corresponding to the user input are not identified (320-NO), the processor may perform operation 340.

Referring to FIG. 3, in the operation 330, the processor of the wearable device according to an embodiment may execute the identified function. For example, the wearable device may execute the function of the operation 330 based on execution of a software application that provides the virtual object corresponding to the user input. In a case that the user input identified by the operation 310 corresponds to a function of a specific virtual object, the wearable device may perform the operation 330. Based on the operation 330, the user wearing the wearable device may perceive a result of executing the function of the wearable device corresponding to the user input.

Referring to FIG. 3, in the operation 340, the processor of the wearable device according to an embodiment may determine whether the same user input has been identified within a preset duration. The preset duration may be, for example, a duration of less than several seconds. The present disclosure is not limited to the above example embodiment. In an embodiment, the duration of the operation 340 may be empirically determined. In a case that no function corresponding to the user input is executed, the user of the wearable device may repeatedly perform the user input. In a case that the same user input as the user input identified based on the operation 310 is not identified within the preset duration (340-NO), the processor may maintain monitoring the user input based on the operation 320.

In a case that the substantially same user input as the user input identified based on the operation 310 is identified within the preset duration (340-YES), the processor may perform operation 350. The processor may perform the operation 340 based on whether an additional user input has been identified within a preset range (e.g., an error range) from a location related to the user input identified by the operation 310.

Referring to FIG. 3, in the operation 350, the processor of the wearable device according to an embodiment may determine whether a virtual object adjacent to a location corresponding to the user input has been identified. The virtual object of the operation 350 may include an object configured to support interaction with the user, such as the virtual object 140 of FIG. 1 as well as the visual object 132 of FIG. 1. The wearable device may identify at least one virtual object adjacent to the location of the operation 350 based on the scan area described with reference to FIG. 2B. In a case that no virtual object adjacent to the location of the operation 350 is identified (350-NO), the processor may perform operation 360. In a case that at least one virtual object adjacent to the location of the operation 350 is identified (350-YES), the processor may perform operation 370.

Referring to FIG. 3, in the operation 360, the processor of the wearable device according to an embodiment may display a visual object for confirming the user input. The visual object of the operation 360 may include text (or a prompt) (e.g., "How can I help you?") requesting an additional user input different from the user input of the operation 310. The visual object of the operation 360 may include text for guiding that the user input of the operation 310 has not been accurately identified, and/or the function corresponding to the user input has not been identified. In a case that the user input of the operation 310 is a voice input, the visual object displayed based on the operation 360 may include text representing a natural language sentence included in the voice input. Based on the visual object of the operation 360, the processor may inform the user of the wearable device of a failure (or an error) of recognition of the user input of the operation 310.

Referring to FIG. 3, in the operation 370, the processor of the wearable device according to an embodiment may determine whether property information of the virtual object identified based on the operation 350 has been identified. The property information of the operation 370 may indicate a user input identifiable based on the virtual object of the operation 370, as in Table 1. The property information of the operation 370 may indicate a sensor required to identify the user input, together with the user input. In a case that the property information of the operation 370 is not identified (370-NO), the processor may perform the above-described operation 360. In a case that the property information of the operation 370 is identified (370-YES), the processor may perform operation 380.

Referring to FIG. 3, in the operation 380, the processor of the wearable device according to an embodiment may recommend another user input based on a second sensor different from the first sensor, based on the property information. The processor may identify a user input, which is identifiable using the second sensor different from the first sensor of the operation 310 and is supported by the virtual object of the operation 370, based on the property information of the operation 370. The processor may display a visual object for describing the identified user input. For example, the processor may display the visual object including text, an image, an icon, and/or a video for describing the user input identified based on the operation 380, such as the visual objects 162 and 164 of FIG. 1.

The second sensor of the operation 380 may be included in the sensor 230 of FIGS. 2A and/or 2B. In an example case in which the first sensor of the operation 310 is the image sensor 230-1 of FIGS. 2A and/or 2B, and the processor identifies a first user input based on a hand gesture using the first sensor, the processor may display a visual object for recommending a second user input (e.g., a voice input of the user) related to the second sensor (e.g., the audio sensor 230-3 of FIGS. 2A and/or 2B) different from the first sensor, based on the property information. The visual object may include text representing speech (or a natural language sentence) related to the second user input.

As described above, the wearable device identifying a user input that may not execute any function through the first sensor may recommend a user input based on the second sensor different from the first sensor. Hereinafter, types of user input identifiable by the wearable device will be exemplarily described with reference to FIG. 4.

FIG. 4 illustrates an example operation of a wearable device 101 identifying a user input. The wearable device 101 of FIGS. 1, 2A, and 2B and/or the processor 210 of FIG. 2A may perform the operation of the wearable device described with reference to FIG. 3. The operation of the wearable device described with reference to FIG. 3 may be related to the interface processor 276 of FIG. 2A.

Referring to FIG. 4, the wearable device 101 according to an embodiment may obtain images 410 of two eyes of a user (e.g., the user 110 of FIG. 1) wearing the wearable device 101, by using the eye sensor 230-2 of FIG. 2A. The images 410 may include an image 411 corresponding to a left eye of the user and/or an image 412 corresponding to a right eye of the user. Based on the images 410, the wearable device 101 may identify a direction of a gaze of the user. A first type of user input identifiable by the wearable device 101 may include a user input (e.g., a gaze input) based on the direction identified by at least one of the images 410.

Referring to FIG. 4, the wearable device 101 according to an embodiment may obtain an image 420 of a hand (e.g., the hand 112 of FIG. 1) of the user wearing the wearable device 101, by using the image sensor 230-1 of FIG. 2A. In order to obtain an image of the hand, image sensors having different directions and/or field-of-views (FOVs) may be positioned in a front surface of the wearable device 101. In the image 420 obtained from at least one of the image sensors, the wearable device 101 may identify a visual object 422 corresponding to the hand. Based on a shape and/or a gesture (e.g., a pointing gesture illustrated with reference to the image 420) of the hand identified using the visual object 422, the wearable device 101 may detect a hand gesture performed by the hand. A second type of user input identifiable by the wearable device 101 may include a user input (e.g., a gesture input) corresponding to the hand gesture identified based on the image 420.

According to an embodiment, the wearable device 101 may obtain an audio signal including speech of the user wearing the wearable device 101, by using the audio sensor 230-3 of FIG. 2A. By performing STT with respect to the audio signal, the wearable device 101 may obtain text corresponding to the speech. In a case that a preset keyword (e.g., "hey," "Bixby," and/or a keyword preset by the user) for calling the wearable device 101 is identified from the text, the wearable device 101 may identify a natural language sentence having a timing adjacent to the preset keyword. For example, such as "Hey Bixby, tell me the weather today," the wearable device 101 may identify the natural language sentence after the preset keyword. The present disclosure is not limited to the above example embodiment. In a case that "What is tomorrow's schedule, Bixby", the wearable device 101 may identify a natural language sentence preceding the preset keyword. A third type of user input identifiable by the wearable device 101 may include a user input (e.g., a voice input) indicated by the natural language sentence.

Referring to FIG. 4, the wearable device 101 according to an embodiment may communicate with an external electronic device (e.g., the speaker 120 of FIG. 1) using the communication circuitry 235 of FIG. 2A. The wearable device 101 may receive a signal indicating a user input for controlling the wearable device 101 from an external electronic device. A fourth type of user input identifiable by the wearable device 101 may include a user input (e.g., a remote control input) indicated by the signal received from the external electronic device.

Referring to FIG. 4, external electronic devices capable of identifying the fourth type of user input while connected (or paired) to the wearable device 101 are illustrated. For example, the wearable device 101 may identify a user input received through a touch screen, a button, a dial, and/or a digital crown of a watch 430 by communicating with the watch 430. For example, the user input may include a hand gesture that rotates the digital crown of the watch 430. For example, the wearable device 101 may identify a user input based on a button and/or a joystick of a remote controller 432, and/or a motion of the remote controller 432 (e.g., a motion of a hand of a user holding the remote controller 432) by communicating with the remote controller 432. For example, the wearable device 101 may identify a user input based on a motion of a hand wearing a glove 434 (or a smart glove) by communicating with the glove 434. For example, the wearable device 101 may identify a user input based on a button, a wheel, and/or a motion of a mouse 436 by communicating with the mouse 436. For example, the wearable device 101 may identify a user input indicated by pressing of one or more buttons included in a keyboard 438, by communicating with the keyboard 438.

In an embodiment, a virtual object provided by the wearable device 101 may be related to property information supporting a plurality of types among the above-described first type to fourth type of user inputs. For example, a first virtual object provided by the wearable device 101 may identify both the first type of gaze input and/or the third type of voice input, and a second virtual object may identify both the second type of gesture input and/or the fourth type of remote control input. The wearable device 101 may determine, select, or identify a type of user input to be recommended to the user among types of user input identifiable by a virtual object. For example, based on a context with respect to one or more interactable objects provided to the user, the wearable device 101 may determine a type of user input to be recommended to the user.

As described above, in a case of identifying first user inputs in which an error occurs (or no function is executed), the wearable device 101 according to an embodiment may recommend, to the user, another type of user input distinct from a type of the first user inputs. For example, based on recommendation of the wearable device 101, the user who has been repeatedly performing a gesture input including a specific hand gesture may perform another type of user input (e.g., a voice input, a gaze input, and/or a remote input) specified by the recommendation. In the example, the user may more accurately transmit an intention of the user related to the hand gesture to the wearable device 101 by using the user input distinct from the hand gesture.

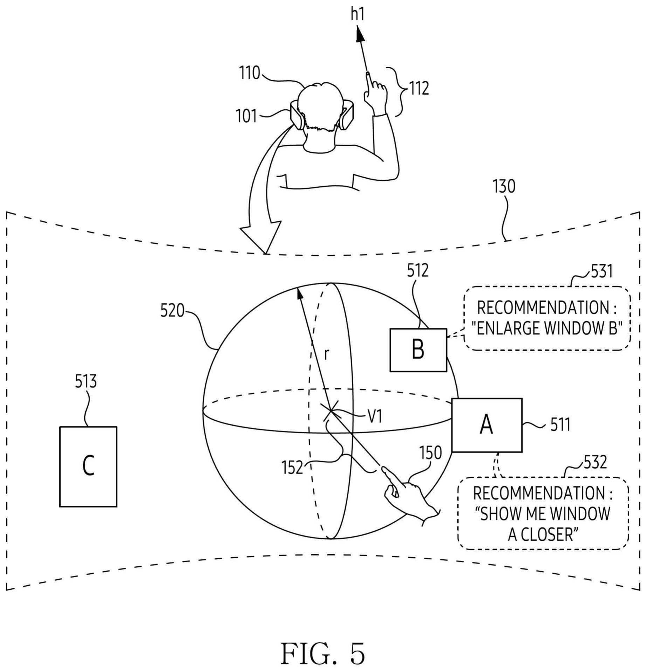

Hereinafter, an operation of the wearable device 101 that recommends a user input distinguished by the types described above with reference to FIG. 4 will be described with reference to FIGS. 5, 6, 7, 8, 9, and/or 10.

FIG. 5 illustrates a UI displayed by a wearable device 101 identifying a user input based on a hand gesture. The wearable device 101 of FIGS. 1, 2A, and 2B and/or the processor 210 of FIG. 2A may perform an operation of the wearable device 101 described with reference to FIG. 5. The operation of the wearable device 101 described with reference to FIG. 5 may be performed based on the execution of the interface processor 276 of FIG. 2A.

Referring to FIG. 5, an example state of the wearable device 101 displaying a screen 130 including a plurality of virtual objects 511, 512, and 513 is illustrated. The virtual objects 511, 512, and 513 may be provided from at least one software application and/or a framework executed by the wearable device 101. Based on three-dimensional coordinates in a virtual space, the wearable device 101 may display the virtual objects 511, 512, and 513 in the screen 130 corresponding to a portion of the virtual space. Each of the virtual objects 511, 512, and 513 may be mapped to information (e.g., property information) including a combination of a function supported by a corresponding virtual object and a user input set to execute the function.

According to an embodiment, the wearable device 101 may identify a user input with respect to a specific location of a virtual space provided through a display, by using one or more sensors (e.g., the sensor 230 of FIGS. 2A and/or 2B). Referring to FIG. 5, an example state of the wearable device 101 identifying a pointing gesture performed based on a hand 112 directed toward a location v1 along a direction h1 is illustrated. The wearable device 101 identifying a first user input including the pointing gesture may display, in the screen 130, a line 152 extending to the location v1 along the direction h1 of the pointing gesture. Although the line 152 having a shape of a straight line is illustrated, aThe present disclosure is not limited to the above example embodiment. For example, the shape of the line 152 may be curved. The wearable device 101 identifying the first user input may determine whether a virtual object is identified at the location v1. In a state identifying the virtual object at the location v1, the wearable device 101 may execute a first function assigned to the identified virtual object and indicated by the first user input. The first user input may be identified based on an image sensor (e.g., the image sensor 230-1 of FIGS. 2A and/or 2B) of the wearable device 101.

Referring to an example state of FIG. 5, the wearable device 101 may not execute any function in response to the first user input in a state in which no virtual object is positioned at the location v1. In an embodiment, the wearable device 101 may identify, scan, or search at least one virtual object adjacent to the location v1 based on identifying a second user input with respect to the location v1 related to the first user input. The second user input may be repeatedly performed by a user (e.g., the user 110 of FIG. 1) who has performed the first user input. The wearable device 101 may initiate identifying the at least one virtual object adjacent to the location v1 based on identifying the second user input within a preset duration after identifying the first user input. For example, the wearable device 101 may identify the at least one virtual object adjacent to the location v1 by using a scan area 520 in a form of a sphere having a radius r and having the location v1 as a center. The radius r may have a fixed length, or may increase or decrease based on the number of virtual objects included in the scan area 520. For example, the wearable device 101 may gradually increase the radius r of the scan area 520 until the preset number of virtual objects are included in the scan area 520.

According to an embodiment, based on identifying at least one virtual object in the scan area 520, the wearable device 101 may display a visual object indicating a third user input corresponding to a function of the at least one virtual object and identifiable by a second sensor different from a first sensor (e.g., the image sensor 230-1 of FIGS. 2A and/or 2B) of the first user input and/or the second user input. Referring to FIG. 5, the wearable device 101 identifying the plurality of virtual objects 511 and 512 in the scan area 520 may display, in the screen 130, visual objects 531 and 532 including text for calling functions executable based on each of the virtual objects 511 and 512. The wearable device 101 may display the visual object 531 at a location in the screen 130 adjacent to the virtual object 512 and/or may display the visual object 532 at a location in the screen 130 adjacent to the virtual object 511.

In an embodiment, the third user input guided by the visual objects 531 and 532 may be determined to be a type different from the first user input and/or the second user input. The wearable device 101 identifying a second type of first user input and second user input related to a hand gesture may guide a user input of another type (e.g., a third type based on a voice input) different from the second type. The wearable device 101 may identify the other type based on property information assigned to the virtual objects 511 and 512 included in the scan area 520.

For example, the wearable device 101 may display the visual object 531 including text (e.g., "Enlarge window B") describing a voice input corresponding to a function of enlarging the virtual object 512. For example, the wearable device 101 may display the visual object 532 including text (e.g., "Show me window A closer") indicating a voice input corresponding to a function of moving the virtual object 532. The visual objects 531 and 532 including texts including names (e.g., window A and/or window B) uniquely assigned to each of the virtual objects 511 and 512 are exemplarily illustrated, but the present disclosure is not limited to the above example embodiment. The wearable device 101 may display texts including numerical values (e.g., indexes) uniquely assigned to each of the virtual objects 511 and 512 in each of the visual objects 531 and 532.

Referring to FIG. 5, in a state displaying the visual objects 531 and 532 in response to the repeatedly performed first user input and second user input, the wearable device 101 may activate a sensor (e.g., the audio sensor 230-3 of FIGS. 2A and/or 2B) corresponding to the third user input (e.g., a voice input) guided by the visual objects 531 and 532. By using the activated sensor, the wearable device 101 may identify the third user input. In an example state of FIG. 5, based on audio data obtained using an audio sensor switched to an active state, the wearable device 101 may determine whether speech related to text included in any one of the visual objects 531 and 532 has been received. In a case of receiving the speech related to the text included in any one of the visual objects 531 and 532, the wearable device 101 may execute a function corresponding to the speech.

As described above, the wearable device 101 according to an embodiment may identify a virtual object related to the pointing gesture among the plurality of virtual objects 511, 512, and 513, based on distances between the line 152 (e.g., a hand ray) displayed based on the hand 112 performing the pointing gesture and each of the plurality of virtual objects 511, 512, and 513 in the screen 130. In a case that no virtual object among the plurality of virtual objects 511, 512, and 513 is related to the pointing gesture, and the user 110 repeatedly performs the pointing gesture, the wearable device 101 may guide to use a means (e.g., voice and/or speech) different from the hand 112 performing the pointing gesture. The guide may include an operation of displaying the visual objects 531 and 532 in the screen 130.

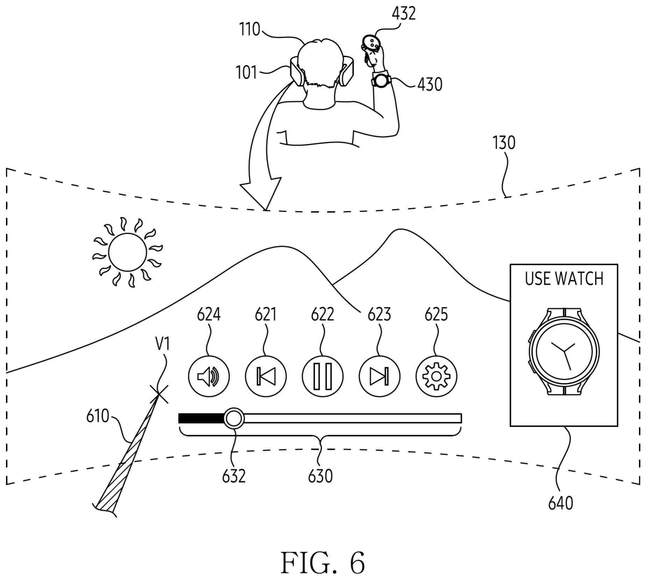

An example operation of the wearable device 101 recommending a voice input in response to a gesture input based on the hand 112 has been described, but the present disclosure is not limited to the above example embodiment. Hereinafter, an operation of the wearable device 101 identifying a user input through an external electronic device will be described with reference to FIG. 6.

FIG. 6 illustrates a UI displayed by a wearable device 101 identifying a user input based on an external electronic device such as a remote controller 432. The wearable device 101 of FIGS. 1, 2A, and 2B and/or the processor 210 of FIG. 2A may perform an operation of the wearable device 101 described with reference to FIG. 6. The operation of the wearable device 101 described with reference to FIG. 6 may be performed based on the execution of the interface processor 276 of FIG. 2A.

Referring to FIG. 6, an example state of the wearable device 101 displaying a screen 130 for playing a video is illustrated. The wearable device 101 may display the screen 130 by executing a software application for playing multimedia content such as a video. In the screen 130, the wearable device 101 may display virtual objects 621, 622, 623, 624, 625, and 630 for controlling playback of a video, together with the video. Through the virtual objects 621, 622, 623, 624, and 625 in a form of a button, the wearable device 101 may identify a user input for executing a preset function related to the video being played through the screen 130. For example, based on a user input related to the virtual object 622, the wearable device 101 may pause the video played through the screen 130. For example, based on a user input related to at least one of the virtual objects 621 and 623, the wearable device 101 may change or switch the video played through the screen 130 to another video in a playlist including the video. For example, based on a user input related to the virtual object 624, the wearable device 101 may cause volume of audio corresponding to the video played through the screen 130 to be substantially zero (e.g., mute). For example, based on a user input related to the virtual object 625, the wearable device 101 may display a menu for adjusting a setting (e.g., a subtitle) related to the video played through the screen 130. The menu may overlap the video in the screen 130.

Referring to an example state of FIG. 6, the wearable device 101 may display the virtual object 630 in a form of a navigation bar for controlling a timing of the video being played through the screen 130. Based on a handle 632 movable on the virtual object 630, the wearable device 101 may visualize the timing of the video being played through the screen 130 within an entire time period of the video. The virtual object 630 may be referred to as a navigation bar, a seek bar, and/or a progress bar.

According to an embodiment, while displaying the screen 130, the wearable device 101 may identify a user input. Referring to FIG. 6, in an example state in which a user holds the remote controller 432, the wearable device 101 may receive a signal indicating a user input identified by the remote controller 432 from the remote controller 432 through communication circuitry (e.g., the communication circuitry 235 of FIG. 2A). The signal may be wirelessly received based on a wireless communication protocol such as Bluetooth. The present disclosure is not limited to the above example embodiment. In an embodiment, the signal may be received through a cable connecting the wearable device 101 and the remote controller 432 based on a wired communication protocol such as a universal serial bus (USB).

Referring to FIG. 6, in an example state in which a user input is identified through the remote controller 432, the wearable device 101 may execute a function corresponding to the user input. The wearable device 101 identifying the user input may display, in the screen 130, a line 610 extending in a reference direction identified by the remote controller 432. The line 610 may correspond to the line 152 of FIGS. 1 and/or 5. In an embodiment, the line 610 may be referred to as a ray. The user input identified through the remote controller 432 may be related to a three-dimensional location v1 corresponding to an end of the line 610. For example, a user 110 wearing the wearable device 101 may move the location v1 of the line 610 by controlling the remote controller 432. The user 110 may perform a user input for selecting a virtual object by pressing a button of the remote controller 432 while the location v1 overlaps the virtual object intended by the user 110. The user input may be included in the fourth type as described above with reference to FIG. 4.

Referring to FIG. 6, the wearable device 101 identifying a user input based on the remote controller 432 may execute a function of a virtual object overlapping the location v1 specified by the user input. Referring to FIG. 6, the wearable device 101 identifying a first user input with respect to the location v1 separated from all of the virtual objects 621, 622, 623, 624, 625, and 630 in the screen 130 may not execute any function based on the user input. After the first user input, in response to a second user input repeatedly performed with respect to the location v1 within a preset duration, the wearable device 101 may recommend a different type of user input distinct from the remote controller 432 to the user 110.

For example, the wearable device 101 may recommend a user input corresponding to a function of the virtual object 624 adjacent to the location v1 to the user 110. The wearable device 101 may further display a visual object for recommending the user input (e.g., a voice input) of a type distinct from the remote controller 432. While displaying the visual object, the wearable device 101 may switch an audio sensor (e.g., the audio sensor 230-3 of FIG. 2A), such as a microphone, from an inactive state to an active state.

For example, the wearable device 101 may recommend a user input corresponding to a function executable by the virtual object 630 adjacent to the location v1 to the user 110. The wearable device 101 may recommend to the user 110, a user input identifiable through an external electronic device distinct from the remote controller 432 identifying the first user input and/or the second user input. For example, the wearable device 101 identifying a watch 430 worn on a wrist of the user 110 may recommend a user input based on a dial of the watch 430 to the user 110.

For example, the wearable device 101 may display, in the screen 130, a visual object 640 for guiding rotation of the dial of the watch 430. The visual object 640 may include text, an image, and/or an icon representing the watch 430 connected (or paired) to the wearable device 101. The visual object 640 may include preset text for guiding the user input based on the watch 430, such as "Use the watch". The user 110 browsing the visual object 640 may rotate the dial of the watch 430. The wearable device 101 receiving a signal indicating the rotation of the dial from the watch 430 may execute the function related to the virtual object 630 based on the signal. For example, the wearable device 101 may adjust the timing of the video being played through the screen 130. The wearable device 101 adjusting the timing may change a position of the handle 632 overlapped on the virtual object 630 based on the timing.

Although an embodiment of recommending the user input based on the dial of the watch 430 has been described, an embodiment is not limited thereto. For example, the wearable device 101 may recommend a user input based on a touch screen, a button, and/or a digital crown of the watch 430.

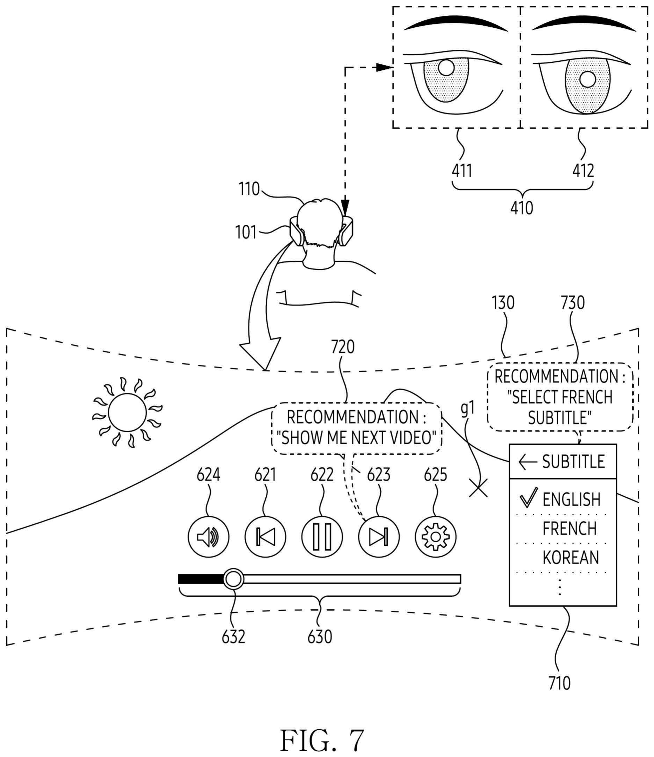

FIG. 7 illustrates a UI displayed by a wearable device 101 identifying a user input based on a gaze. The wearable device 101 of FIGS. 1, 2A, and 2B and/or the processor 210 of FIG. 2A may perform an operation of the wearable device 101 described with reference to FIG. 7. The operation of the wearable device 101 described with reference to FIG. 7 may be performed based on the execution of the interface processor 276 of FIG. 2A.

Referring to FIG. 7, similar to FIG. 6, an example state of the wearable device 101 displaying a screen 130 for playing a video is illustrated. While displaying the screen 130, the wearable device 101 may identify a user input using one or more sensors, such as the eye sensor 230-2 of FIG. 2A. For example, the wearable device 101 may identify a direction of a gaze directed toward a location g1 in the screen 130 based on images 410 of two eyes of a user 110 wearing the wearable device 101 obtained using an eye sensor. Although an example operation in which the wearable device 101 identifies the location g1 corresponding to a single coordinate and/or pixel in the screen 130 is described, an embodiment is not limited thereto. For example, the wearable device 101 may identify a gaze of the user 110 directed toward an area having a size, such as a circle having a radius.

Referring to FIG. 7, based on the direction of the gaze identified based on the images 410, the wearable device 101 may identify a gaze input of the user 110. For example, the user 110 wearing the wearable device 101 may gaze at the specific location g1 for longer than a preset duration, may press a button of the wearable device 101 and/or perform a hand gesture (e.g., a pinch gesture) in a state staring at the specific location g1. The wearable device 101 identifying a motion of the user 110 staring at the specific location g1 for longer than the preset duration may identify a first type of user input related to the location g1. While staring at the specific location g1, the wearable device 101 identifying the pressing of the button and/or the hand gesture may identify the first type of user input (e.g., a gaze input) related to the location g1.

The wearable device 101 identifying a first user input based on the gaze may execute a function assigned to a virtual object that is positioned at the location g1 specified by the direction of the gaze and/or that is adjacent to the location g1. In an example state of FIG. 7 in which the location g1 is separated from all of virtual objects 621, 622, 623, 624, 625, and 630 in the screen 130, the wearable device 101 may not execute any function based on the first user input. After the first user input, in response to a second user input related to the location g1 within a preset duration (or in an area within an error range from the location g1), the wearable device 101 may recommend to the user 110 another type of user input different from the first type of first user input and/or second user input.

For example, the wearable device 101 may identify the virtual objects 623 and 625 adjacent to the location g1. The wearable device 101 identifying the virtual object 623 adjacent to the location g1 may display a visual object 720 guiding a voice input different from the gaze input based on property information corresponding to the virtual object 623. In the visual object 720, the wearable device 101 may display a natural language sentence (e.g., "Show me the next video") representing a function supported by the virtual object 623 (e.g., a function of switching a video displayed through the screen 130).

In an embodiment, the wearable device 101 identifying the virtual object 625 adjacent to the location g1 may recommend a user input based on a usage history of the user 110 with respect to a menu (or options in the menu) provided through the virtual object 625. For example, in a case that the user 110 sets a subtitle language to French in the menu provided through the virtual object 625, the wearable device 101 may display a visual object 730 related to an input for setting the subtitle language to French. In the visual object 730, the wearable device 101 may display a natural language sentence (e.g., "Select the French subtitle") corresponding to the input.

While displaying the visual objects 720 and 730, the wearable device 101 may obtain an audio signal related to speech of the user 110 by using an activated audio sensor (e.g., the audio sensor 230-3 of FIGS. 2A and/or 2B). For example, the user 110 browsing the visual objects 720 and 730 may speak any one of the natural language sentences included in the visual objects 720 and 730. Based on the speech of the user 110 identified based on the audio sensor and/or STT, the wearable device 101 may execute at least one function indicated by the speech. In a case that a microphone of the wearable device 101 is not switched to an active state or is occupied by another software application while displaying the visual objects 720 and 730 for recommending a voice input, the wearable device 101 may obtain the audio signal using a microphone of an external electronic device (e.g., the watch 430 and/or the remote controller 432 of FIG. 4) connected to the wearable device 101.

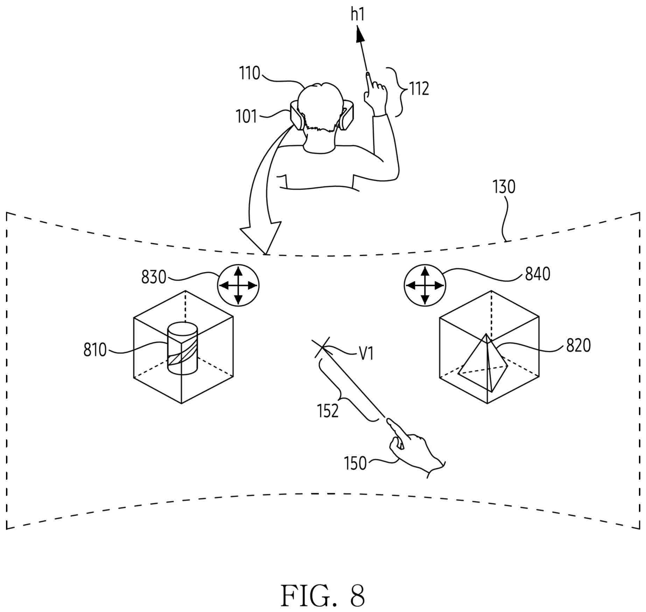

FIG. 8 illustrates a UI displayed by a wearable device 101 identifying a user input based on a hand gesture. The wearable device 101 of FIGS. 1, 2A, and 2B and/or the processor 210 of FIG. 2A may perform an operation of the wearable device 101 described with reference to FIG. 8. The operation of the wearable device 101 described with reference to FIG. 8 may be performed based on the execution of the interface processor 276 of FIG. 2A.

Referring to FIG. 8, an example state of the wearable device 101 displaying a screen 130 including a plurality of virtual objects 810 and 820 is illustrated. While displaying the screen 130, the wearable device 101 may identify a posture, a shape, and/or a direction h1 of a hand 112 of a user 110 by using the image sensor 230-1 of FIG. 2A. Referring to FIG. 8, the wearable device 101 identifying a first user input including a pointing gesture directed toward a location v1 along the direction h1 may execute a function assigned to at least one virtual object related to the location v1. Referring to FIG. 8, in a case that no virtual object is positioned at the location v1, the wearable device 101 may not execute any function despite the first user input.

Within a preset duration after the first user input, the wearable device 101 identifying a second user input related to the location v1 may not execute any function for any virtual object, similar to the first user input. Instead of executing any function, the wearable device 101 may perform an operation (e.g., the operation of FIG. 3) for identifying an intention of the user 110. For example, the wearable device 101 may recommend a user input of a type different from the gesture input based on the hand 112 in order to more accurately identify the intention of the user 110.

In an embodiment, in response to the repeatedly performed first user input and second user input, the wearable device 101 may identify the virtual objects 810 and 820 adjacent to the location v1 corresponding to the first user input and the second user input. Based on property information of the virtual objects 810 and 820, the wearable device 101 may identify a type of user input to be recommended to the user 110. In a case that the property information corresponding to the virtual objects 810 and 820 is set to receive a user input of a type of the first user input and the second user input (e.g., in a case of FIG. 8, a second type corresponding to the gesture input), the wearable device 101 may recommend the gesture input based on the hand 112 to the user 110, similar to the first user input and the second user input.

Referring to FIG. 8, an example state in which the wearable device 101 identifies the virtual objects 810 and 820 matched to the property information set to receive the gesture input related to the hand 112 in response to the first user input and the second user input repeatedly performed based on the hand 112 is illustrated. In the state, the wearable device 101 may display visual objects 830 and 840 related to a function of the virtual objects 810 and 820 executable by the hand 112. For example, in a case that the virtual objects 810 and 820 may execute three-dimensional movement of the virtual objects 810 and 820 based on a gesture performed by the hand 112, the wearable device 101 may display the visual objects 830 and 840 for the three-dimensional movement.

In an example state of FIG. 8, each of the visual objects 830 and 840 may include icons indicating that the virtual objects 810 and 820 are movable. In response to a user input related to any one of the visual objects 830 and 840, the wearable device 101 may change three-dimensional coordinates of any one of the virtual objects 810 and 820. Based on the changed three-dimensional coordinates, the wearable device 101 may change a position of a virtual object corresponding to the user input in the screen 130.

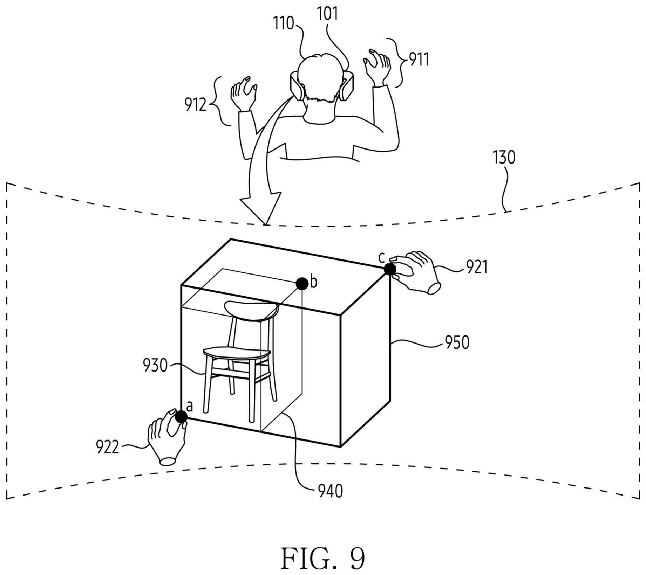

FIG. 9 illustrates a UI displayed by a wearable device 101 identifying a user input based on a hand gesture. The wearable device 101 of FIGS. 1, 2A, and 2B and/or the processor 210 of FIG. 2A may perform an operation of the wearable device 101 described with reference to FIG. 9. The operation of the wearable device 101 described with reference to FIG. 9 may be performed while the interface processor 276 of FIG. 2A is executed.

Referring to FIG. 9, an example state of the wearable device 101 identifying a hand gesture based on two hands (e.g., a right hand 911 and/or a left hand 912) of a user 110 while displaying a screen 130 including a virtual object 930 is illustrated. The wearable device 101 identifying the right hand 911 using the image sensor 230-1 of FIG. 2A may display, in the screen 130, a virtual object 921 representing a position, a posture, and/or a direction of the right hand 911. Similarly, the wearable device 101 identifying the left hand 912 using the image sensor may display a virtual object 922, which is a graphical object representing the left hand 912, in the screen 130. The virtual objects 921 and 922 may be referred to as an avatar corresponding to the user 110.

Referring to FIG. 9, the wearable device 101 identifying the two hands of the user 110 may identify a hand gesture based on at least one of the two hands. For example, the wearable device 101 may identify a pinch gesture, performed based on the left hand 912, with respect to a vertex a of the virtual object 930. While identifying a first pinch gesture based on the left hand 912, the wearable device 101 may further identify a second pinch gesture related to a location c performed based on the right hand 911.

In an example case of FIG. 9, a function of changing a size of the virtual object 930 (e.g., dimensions of the virtual object 930 such as a width, a height, and a depth) may be matched to pinch gestures corresponding to each of vertices a and b of the virtual object 930. The wearable device 101 executing the function may display, in the screen 130, a bounding box 940 having a shape of a rectangular parallelepiped surrounding the virtual object 930.

In the case, since the location c related to the second pinch gesture is separated from the virtual object 930, the wearable device 101 identifying the first pinch gesture and the second pinch gesture may not execute the function. In a case that the location c is separated from all of virtual objects displayed through the screen 130, the wearable device 101 may identify the virtual object 930 adjacent to the location c and/or a location b associated with the function related to the virtual object 930 in order to estimate an intention of the user 110 related to the second pinch gesture. While identifying a virtual object adjacent to the location c, the wearable device 101 may gradually enlarge the virtual object 921 corresponding to the second pinch gesture, and/or change a color and/or transparency of the virtual object 921.

In an example case of FIG. 9, the wearable device 101 identifying the vertex b of the virtual object 930 adjacent to the location c corresponding to the second pinch gesture may execute a function related to the vertex b. For example, the wearable device 101 identifying the first pinch gesture with respect to the vertex a and the second pinch gesture performed with respect to the location c may operate similarly to identifying the pinch gestures with respect to each of the vertices a and b by changing the location c corresponding to the second pinch gesture to the vertex b. For example, the wearable device 101 may execute the function for adjusting the size of the virtual object 930 based on the first pinch gesture and the second pinch gesture. The wearable device 101 executing the function may display a bounding box 950, having a rectangular parallelepiped shape, including the vertex associated with the virtual object 922 corresponding to the left hand 912 performing the first pinch gesture and the location c in the screen 130 corresponding to the right hand 911 performing the second pinch gesture. While displaying the bounding box 950, the wearable device 101 may change a size of the bounding box 950 and/or the virtual object 930 based on a distance between the two hands maintaining the pinch gesture.

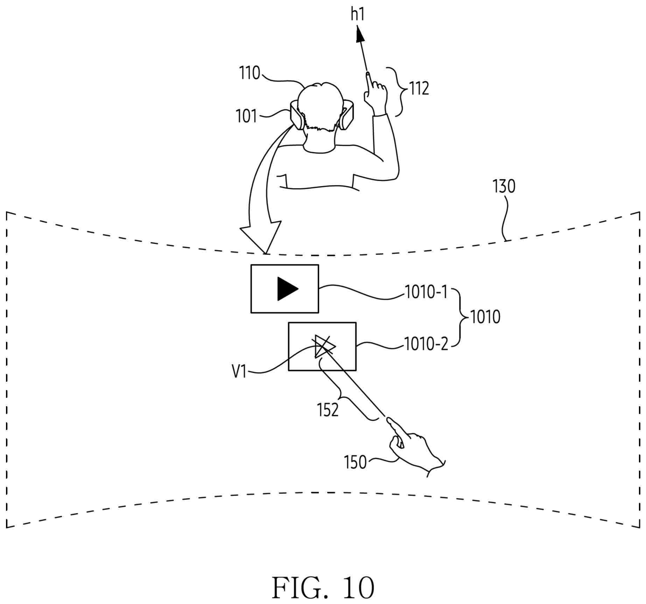

FIG. 10 illustrates a UI displayed by a wearable device 101 identifying a user input based on a hand gesture. The wearable device 101 of FIGS. 1, 2A, and 2B and/or the processor 210 of FIG. 2A may perform an operation of the wearable device 101 described with reference to FIG. 10. The operation of the wearable device 101 described with reference to FIG. 10 may be related to the interface processor 276 of FIG. 2A.

Referring to FIG. 10, an example state of the wearable device 101 identifying a hand gesture performed by a hand 112 of a user 110 while displaying a screen 130 including a virtual object 1010 is illustrated. The wearable device 101 may obtain an image and/or a video related to the hand 112 by using the image sensor 230-1 of FIG. 2A. Based on a position, a shape, and/or a direction h1 of the hand 112 identified based on the image, the wearable device 101 may display, in the screen 130, a virtual object 150 corresponding to the hand 112. Based on the direction h1 of the hand 112, the wearable device 101 may display, in the screen 130, a line 152 corresponding to the direction h1.

Referring to FIG. 10, while displaying a virtual object 1010-1 at a first location in the screen 130, the wearable device 101 may identify a user input including a pointing gesture directed toward a location v1. In a case that no virtual object is positioned at the location v1, the wearable device 101 may not execute any function. Based on identifying one or more user inputs with respect to the location v1, the wearable device 101 may identify the virtual object 1010-1 adjacent to the location v1.

The wearable device 101 identifying the virtual object 1010-1 displayed at the first location separated from the location v1 in which a user input is identified may move the virtual object 1010-1 to the location v1. For example, the wearable device 101 may move the virtual object 1010-1 along a depth direction. Based on the movement, the wearable device 101 may display a virtual object 1010-2 located at the location v1. Moving the virtual object 1010 by the wearable device 101 may be performed in a case that no type of user input other than a gesture input based on the hand 112 is set to property information corresponding to the virtual object 1010. The present disclosure is not limited to the above example embodiment. For example, based on the property information, in a state in which the virtual object 1010 capable of responding to the gesture input related to the hand 112 and/or a voice input is identified, in a case that an audio sensor (e.g., the audio sensor 230-3 of FIGS. 2A and/or 2B) for receiving the voice input maintains an inactive state or the audio sensor is dedicated to a specific software application, the wearable device 101 may move the virtual object 1010 to the location v1 where it is easy to receive the gesture input related to the hand 112.

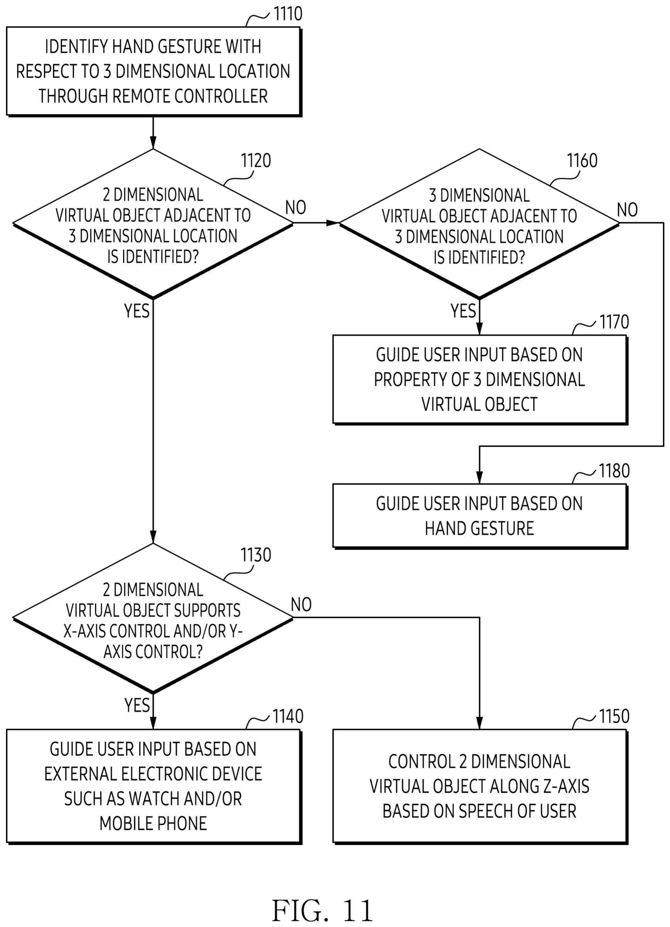

FIG. 11 illustrates an example of a flowchart of a wearable device according to an embodiment. The wearable device 101 of FIGS. 1, 2A, and 2B and/or the processor 210 of FIG. 2A may perform an operation of the wearable device described with reference to FIG. 11. The operation of the wearable device described with reference to FIG. 11 may be related to the operation of FIG. 3.

Referring to FIG. 11, in operation 1110, a processor of the wearable device according to an embodiment may identify a hand gesture with respect to a three-dimensional location through a remote controller (e.g., the remote controller 432 of FIG. 4). The wearable device may identify the hand gesture of the operation 1110 based on the operation described with reference to FIG. 6.

Referring to FIG. 11, in operation 1120, the processor of the wearable device according to an embodiment may identify a two-dimensional virtual object adjacent to the three-dimensional location. In a case that the two-dimensional virtual object adjacent to the three-dimensional location of the operation 1110 is identified (1120-YES), the processor of the wearable device may perform operation 1130. In a case that no two-dimensional virtual object adjacent to the three-dimensional location of the operation 1110 exists (1120-NO) or in a case that another virtual object different from the two-dimensional virtual object is identified, the processor of the wearable device may perform operation 1160.

Referring to FIG. 11, in the operation 1130, the processor of the wearable device according to an embodiment may identify whether the two-dimensional virtual object supports x-axis control and/or y-axis control. The processor may identify whether the two-dimensional virtual object supports the x-axis control and/or the y-axis control by using property information corresponding to the two-dimensional virtual object of the operation 1130. The x-axis and/or the y-axis may correspond to each of a horizontal direction and a vertical direction of a display (e.g., the display 220 of FIG. 2A) of the wearable device. In a case that the two-dimensional virtual object supports the x-axis control and/or the y-axis control (1130-YES), the processor of the wearable device may perform operation 1140. In a case that the two-dimensional virtual object does not support all of the x-axis control and the y-axis control or supports only z-axis control (1130-NO), the processor of the wearable device may perform operation 1150.

Referring to FIG. 11, in the operation 1140, the processor of the wearable device according to an embodiment may guide a user input based on an external electronic device such as a watch (e.g., the watch 430 of FIG. 4) and/or a mobile phone. The operation 1140 may be performed while identifying at least one virtual object wirelessly connected (or paired) to the wearable device. For example, the processor may display a visual object for guiding a user input based on the watch, such as the visual object 640 of FIG. 6. Based on the guide of the operation 1140, the wearable device may cause a user to perform the user input based on the external electronic device of the operation 1140. The processor identifying the user input guided by the operation 1140 may move the two-dimensional virtual object along a direction of the x-axis and/or the y-axis.

Referring to FIG. 11, in the operation 1150, the processor of the wearable device according to an embodiment may control the two-dimensional virtual object along the z-axis based on speech of the user. In order to obtain the speech, in the operation 1150, the processor of the wearable device may activate an audio sensor (e.g., the audio sensor 230-3 of FIG. 2A) of the wearable device including a microphone. The processor may identify the speech of the user by performing voice recognition (e.g., voice recognition based on at least one of STT and/or NLU) on an audio signal outputted from the audio sensor. Based on the speech, the processor may move the two-dimensional virtual object along a direction of the z-axis.

Referring to FIG. 11, in the operation 1160, the processor of the wearable device according to an embodiment may identify a three-dimensional virtual object adjacent to the three-dimensional location. The processor may scan a virtual space including one or more virtual objects centered on the three-dimensional location of the operation 1110. In a state of identifying the three-dimensional virtual object of the operation 1160 (1160-YES), the processor of the wearable device may perform operation 1170. In a case that no three-dimensional virtual object is identified based on the operation 1160 (1160-NO), the processor of the wearable device may perform operation 1180.

Referring to FIG. 11, in the operation 1170, the processor of the wearable device according to an embodiment may guide a user input based on a property of the three-dimensional virtual object identified based on the operation 1160. For example, by using property information corresponding to the three-dimensional virtual object of the operation 1160, the processor may guide a user input of a type different from the hand gesture of the operation 1110. The processor may select a type of the user input according to a priority indicated by the property information.

Referring to FIG. 11, in the operation 1180, the processor of the wearable device according to an embodiment may guide a user input based on the hand gesture. Based on the operation 1180, the processor, which does not identify both the two-dimensional virtual object and the three-dimensional virtual object, may guide a gesture input based on the hand gesture. For example, the processor may guide the hand gesture to be performed on a real object.

The operations described with reference to FIG. 11 may be at least partially related to Table 1. The operation described with reference to FIG. 11 may be represented by a pseudo-code of Table 2.

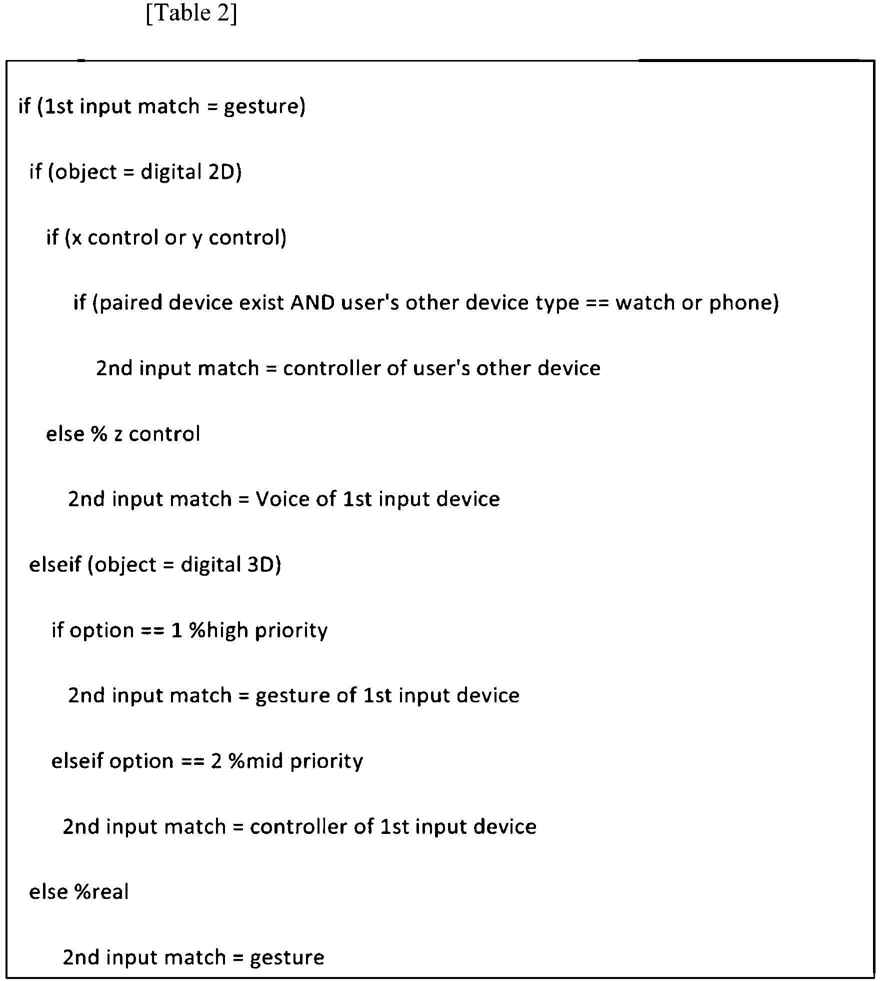

Referring to Table 2, the processor may change a sensor related to a user input according to a category of a virtual object (e.g., the two-dimensional virtual object and/or the three-dimensional virtual object) and/or according to a function supported by the virtual object.

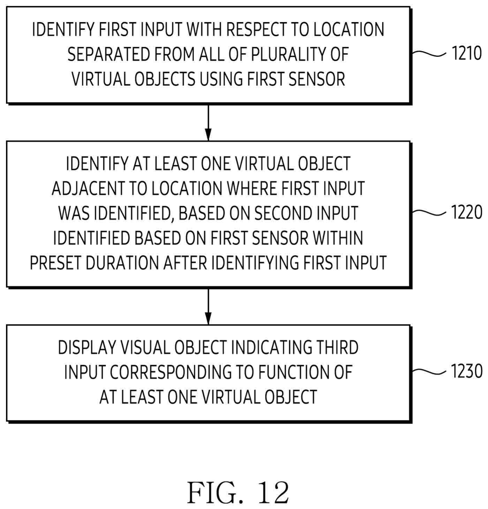

FIG. 12 illustrates an example of a flowchart of a wearable device according to an embodiment. The wearable device 101 of FIGS. 1, 2A, and 2B and/or the processor 210 of FIG. 2A may perform an operation of the wearable device described with reference to FIG. 12. The operation of the wearable device described with reference to FIG. 12 may be related to the operations of FIGS. 3 and/or 11.

Referring to FIG. 12, in operation 1210, a processor of the wearable device according to an embodiment may identify a first input with respect to a location separated from all of the plurality of virtual objects using a first sensor. The first sensor may be included in the sensor 230 of FIG. 2A. In a state of identifying the first input with respect to the location separated from all of the virtual objects, the processor may not execute any function among functions assigned to each of the virtual objects. For example, based on the first input, the processor may refrain from executing all of the functions.

Referring to FIG. 12, in operation 1220, based on a second input identified based on the first sensor within a preset duration after identifying the first input, the processor of the wearable device according to an embodiment may identify at least one virtual object adjacent to the location where the first input was identified. The second input may be identified based on the location where the first input of the operation 1210 is identified. Based on the operation 1220, the processor may identify the at least one virtual object of the operation 1220 by using a scan area (e.g., the scan area 520 of FIG. 5) formed centered on the location where the first input was identified.

Referring to FIG. 12, in operation 1230, the processor of the wearable device according to an embodiment may display a visual object indicating a third input corresponding to a function of at least one virtual object. The processor may identify the function of the operation 1230 by using property information corresponding to the at least one virtual object identified based on the operation 1220. The processor may identify the third input identifiable by a second sensor different from the first sensor of the operation 1210 by using the property information. The second sensor may be included in the sensor 230 of FIG. 2A. The visual object of the operation 1230 may include the visual objects 162 and 164 of FIG. 1, the visual objects 531 and 532 of FIG. 5, the visual object 640 of FIG. 6, and/or the visual objects 720 and 730 of FIG. 7.

Hereinafter, an example exterior of the wearable device described with reference to FIGS. 1 to 12 is illustrated with reference to FIGS. 13A, 13B, 14A, and/or 14B. A wearable device 1300 of FIGS. 13A and/or 13B and/or a wearable device 1400 of FIGS. 14A and/or 14B may be an example of the wearable device 101 of FIG. 1.

FIG. 13A illustrates an example of a perspective view of a wearable device according to an embodiment. A wearable device 1300 according to an embodiment may have a shape of glasses that are wearable on a user's body part (e.g., head). The wearable device 1300 may include a head-mounted display (HMD). For example, a housing of the wearable device 1300 may include a flexible material such as rubber and/or silicone that are in close contact with a part of the user's head (e.g., a part of a face surrounding two eyes). For example, the housing of the wearable device 1300 may include one or more straps able to be twined around the user's head and/or one or more temples attachable to the head's ear.

Referring to FIG. 13A, according to an embodiment, the wearable device 1300 may include at least one display 1350 and a frame 1300 supporting the at least one display 1350.

According to an embodiment, the wearable device 1300 may be wearable on a portion of the user's body. The wearable device 1300 may provide augmented reality (AR), virtual reality (VR), or mixed reality (MR) combining the augmented reality and the virtual reality to a user wearing the wearable device 1300. For example, the wearable device 1300 may display a virtual reality image provided from at least one optical device 1382 and 1384 of FIG. 13B on at least one display 1350, in response to a user's preset gesture obtained through a motion recognition camera 1360-2 and 1360-3 of FIG. 13B.

According to an embodiment, the at least one display 1350 may provide visual information to a user. For example, the at least one display 1350 may include a transparent or translucent lens. The at least one display 1350 may include a first display 1350-1 and/or a second display 1350-2 spaced apart from the first display 1350-1. For example, the first display 1350-1 and the second display 1350-2 may be disposed at positions corresponding to the user's left and right eyes, respectively.

Referring to FIG. 13B, the at least one display 1350 may provide visual information transmitted through a lens included in the at least one display 1350 from ambient light to a user and other visual information distinguished from the visual information13. The lens may be formed based on at least one of a fresnel lens, a pancake lens, or a multi-channel lens. For example, the at least one display 1350 may include a first surface 1331 and a second surface 1332 opposite to the first surface 1331. A display area may be formed on the second surface 1332 of at least one display 1350. When the user wears the wearable device 1300, ambient light may be transmitted to the user by being incident on the first surface 1331 and being penetrated through the second surface 1332. For another example, the at least one display 1350 may display an augmented reality image in which a virtual reality image provided by the at least one optical device 1382 and 1384 is combined with a reality screen transmitted through ambient light, on a display area formed on the second surface 1332.

According to an embodiment, the at least one display 1350 may include at least one waveguide 1333 and 1334 that transmits light transmitted from the at least one optical device 1382 and 1384 by diffracting to the user. The at least one waveguide 1333 and 1334 may be formed based on at least one of glass, plastic, or polymer. A nano pattern may be formed on at least a portion of the outside or inside of the at least one waveguide 1333 and 1334. The nano pattern may be formed based on a grating structure having a polygonal or curved shape. Light incident to an end of the at least one waveguide 1333 and 1334 may be propagated to another end of the at least one waveguide 1333 and 1334 by the nano pattern. The at least one waveguide 1333 and 1334 may include at least one of at least one diffraction element (e.g., a diffractive optical element (DOE), a holographic optical element (HOE)), and a reflection element (e.g., a reflection mirror). For example, the at least one waveguide 1333 and 1334 may be disposed in the wearable device 1300 to guide a screen displayed by the at least one display 1350 to the user's eyes. For example, the screen may be transmitted to the user's eyes based on total internal reflection (TIR) generated in the at least one waveguide 1333 and 1334.

The wearable device 1300 may analyze an object included in a real image collected through a photographing camera 1360-4, combine with a virtual object corresponding to an object that becomes a subject of augmented reality provision among the analyzed object, and display on the at least one display 1350. The virtual object may include at least one of text and images for various information associated with the object included in the real image. The wearable device 1300 may analyze the object based on a multi-camera such as a stereo camera. For the object analysis, the wearable device 1300 may execute space recognition (e.g., simultaneous localization and mapping (SLAM)) using the multi-camera and/or time-of-flight (ToF). The user wearing the wearable device 1300 may watch an image displayed on the at least one display 1350.

According to an embodiment, a frame 1300 may be configured with a physical structure in which the wearable device 1300 may be worn on the user's body. According to an embodiment, the frame 1300 may be configured so that when the user wears the wearable device 1300, the first display 1350-1 and the second display 1350-2 may be positioned corresponding to the user's left and right eyes. The frame 1300 may support the at least one display 1350. For example, the frame 1300 may support the first display 1350-1 and the second display 1350-2 to be positioned at positions corresponding to the user's left and right eyes.

Referring to FIG. 13A, according to an embodiment, the frame 1300 may include an area 1320 at least partially in contact with the portion of the user's body in case that the user wears the wearable device 1300. For example, the area 1320 of the frame 1300 in contact with the portion of the user's body may include an area in contact with a portion of the user's nose, a portion of the user's ear, and a portion of the side of the user's face that the wearable device 1300 contacts. According to an embodiment, the frame 1300 may include a nose pad 1310 that is contacted on the portion of the user's body. When the wearable device 1300 is worn by the user, the nose pad 1310 may be contacted on the portion of the user's nose. The frame 1300 may include a first temple 1304 and a second temple 1305, which are contacted on another portion of the user's body that is distinct from the portion of the user's body.

For example, the frame 1300 may include a first rim 1301 surrounding at least a portion of the first display 1350-1, a second rim 1302 surrounding at least a portion of the second display 1350-2, a bridge 1303 disposed between the first rim 1301 and the second rim 1302, a first pad 1311 disposed along a portion of the edge of the first rim 1301 from one end of the bridge 1303, a second pad 1312 disposed along a portion of the edge of the second rim 1302 from the other end of the bridge 1303, the first temple 1304 extending from the first rim 1301 and fixed to a portion of the wearer's ear, and the second temple 1305 extending from the second rim 1302 and fixed to a portion of the ear opposite to the ear. The first pad 1311 and the second pad 1312 may be in contact with the portion of the user's nose, and the first temple 1304 and the second temple 1305 may be in contact with a portion of the user's face and the portion of the user's ear. The temples 1304 and 1305 may be rotatably connected to the rim through hinge units 1306 and 1307 of FIG. 13B. The first temple 1304 may be rotatably connected with respect to the first rim 1301 through the first hinge unit 1306 disposed between the first rim 1301 and the first temple 1304. The second temple 1305 may be rotatably connected with respect to the second rim 1302 through the second hinge unit 1307 disposed between the second rim 1302 and the second temple 1305. According to an embodiment, the wearable device 1300 may identify an external object (e.g., a user's fingertip) touching the frame 1300 and/or a gesture performed by the external object by using a touch sensor, a grip sensor, and/or a proximity sensor formed on at least a portion of the surface of the frame 1300.

According to an embodiment, the wearable device 1300 may include hardware (e.g., hardware described above based on the block diagram of FIGS. 2A and/or 2B) that performs various functions. For example, the hardware may include a battery module 1370, an antenna module 1375, the at least one optical device 1382 and 1384, speakers (e.g., speakers 1355-1 and 1355-2), a microphone (e.g., microphones 1365-1, 1365-2, and 1365-3), a light emitting module, and/or a printed circuit board (PCB) 1390 (e.g., printed circuit board). Various hardware may be disposed in the frame 1300.

According to an embodiment, the microphone (e.g., the microphones 1365-1, 1365-2, and 1365-3) of the wearable device 1300 may obtain a sound signal, by being disposed on at least a portion of the frame 1300. The first microphone 1365-1 disposed on the bridge 1303, the second microphone 1365-2 disposed on the second rim 1302, and the third microphone 1365-3 disposed on the first rim 1301 are illustrated in FIG. 13B, but the number and disposition of the microphone 1365 are not limited to an embodiment of FIG. 13B. In case that the number of the microphone 1365 included in the wearable device 1300 is two or more, the wearable device 1300 may identify a direction of the sound signal by using a plurality of microphones disposed on different portions of the frame 1300.

According to an embodiment, the at least one optical device 1382 and 1384 may project a virtual object on the at least one display 1350 in order to provide various image information to the user. For example, the at least one optical device 1382 and 1384 may be a projector. The at least one optical device 1382 and 1384 may be disposed adjacent to the at least one display 1350 or may be included in the at least one display 1350 as a portion of the at least one display 1350. According to an embodiment, the wearable device 1300 may include a first optical device 1382 corresponding to the first display 1350-1, and a second optical device 1384 corresponding to the second display 1350-2. For example, the at least one optical device 1382 and 1384 may include the first optical device 1382 disposed at a periphery of the first display 1350-1 and the second optical device 1384 disposed at a periphery of the second display 1350-2. The first optical device 1382 may transmit light to the first waveguide 1333 disposed on the first display 1350-1, and the second optical device 1384 may transmit light to the second waveguide 1334 disposed on the second display 1350-2.

In an embodiment, a camera 1360 may include the photographing camera 1360-4, an eye tracking camera (ET CAM) 1360-1, and/or the motion recognition camera 1360-2 and 1360-3. The photographing camera 1360-4, the eye tracking camera 1360-1, and the motion recognition camera 1360-2 and 1360-3 may be disposed at different positions on the frame 1300 and may perform different functions. The eye tracking camera 1360-1 may output data indicating a position of eye or a gaze of the user wearing the wearable device 1300. For example, the wearable device 1300 may detect the gaze from an image including the user's pupil obtained through the eye tracking camera 1360-1.

The wearable device 1300 may identify an object (e.g., a real object, and/or a virtual object) focused by the user, by using the user's gaze obtained through the eye tracking camera 1360-1. The wearable device 1300 identifying the focused object may execute a function (e.g., gaze interaction) for interaction between the user and the focused object. The wearable device 1300 may represent a portion corresponding to eye of an avatar indicating the user in the virtual space, by using the user's gaze obtained through the eye tracking camera 1360-1. The wearable device 1300 may render an image (or a screen) displayed on the at least one display 1350, based on the position of the user's eye.

For example, visual quality (e.g., resolution, brightness, saturation, grayscale, and PPI) of a first area related to the gaze within the image and visual quality of a second area distinguished from the first area may be different. The wearable device 1300 may obtain an image having the visual quality of the first area matching the user's gaze and the visual quality of the second area by using foveated rendering. For example, when the wearable device 1300 supports an iris recognition function, user authentication may be performed based on iris information obtained using the eye tracking camera 1360-1. An example in which the eye tracking camera 1360-1 is disposed toward the user's right eye is illustrated in FIG. 13B, but The present disclosure is not limited to the above example embodiment. In an embodiment, the eye tracking camera 1360-1 may be disposed alone toward the user's left eye or may be disposed toward two eyes.

In an embodiment, the photographing camera 1360-4 may photograph a real image or background to be matched with a virtual image in order to implement the augmented reality or mixed reality content. The photographing camera 1360-4 may be used to obtain an image having a high resolution based on a high resolution (HR) or a photo video (PV). The photographing camera 1360-4 may photograph an image of a specific object existing at a position viewed by the user and may provide the image to the at least one display 1350. The at least one display 1350 may display one image in which a virtual image provided through the at least one optical device 1382 and 1384 is overlapped with information on the real image or background including an image of the specific object obtained by using the photographing camera 1360-4. The wearable device 1300 may compensate for depth information (e.g., a distance between the wearable device 1300 and an external object obtained through a depth sensor), by using an image obtained through the photographing camera 1360-4. The wearable device 1300 may perform object recognition through an image obtained using the photographing camera 1360-4. The wearable device 1300 may perform a function (e.g., auto focus) of focusing an object (or subject) within an image and/or an optical image stabilization (OIS) function (e.g., an anti-shaking function) by using the photographing camera 1360-4. While displaying a screen representing a virtual space on the at least one display 1350, the wearable device 1300 may perform a pass through function for displaying an image obtained through the photographing camera 1360-4 overlapping at least a portion of the screen. In an embodiment, the photographing camera 1360-4 may be disposed on the bridge 1303 disposed between the first rim 1301 and the second rim 1302.

The eye tracking camera 1360-1 may implement a more realistic augmented reality by matching the user's gaze with the visual information provided on the at least one display 1350, by tracking the gaze of the user wearing the wearable device 1300. For example, when the user looks at the front, the wearable device 1300 may naturally display environment information associated with the user's front on the at least one display 1350 at a position where the user is positioned. The eye tracking camera 1360-1 may be configured to capture an image of the user's pupil in order to determine the user's gaze. For example, the eye tracking camera 1360-1 may receive gaze detection light reflected from the user's pupil and may track the user's gaze based on the position and movement of the received gaze detection light. In an embodiment, the eye tracking camera 1360-1 may be disposed at a position corresponding to the user's left and right eyes. For example, the eye tracking camera 1360-1 may be disposed in the first rim 1301 and/or the second rim 1302 to face the direction in which the user wearing the wearable device 1300 is positioned.

The motion recognition camera 1360-2 and 1360-3 may provide a specific event to the screen provided on the at least one display 1350 by recognizing the movement of the whole or portion of the user's body, such as the user's torso, hand, or face. The motion recognition camera 1360-2 and 1360-3 may obtain a signal corresponding to motion by recognizing the user's motion (e.g., gesture recognition), and may provide a display corresponding to the signal to the at least one display 1350. The processor may identify a signal corresponding to the operation and may perform a preset function based on the identification. The motion recognition camera 1360-2 and 1360-3 may be used to perform simultaneous localization and mapping (SLAM) for 6 degrees of freedom pose (6 dof pose) and/or a space recognition function using a depth map. The processor may perform a gesture recognition function and/or an object tracking function, by using the motion recognition camera 1360-2 and 1360-3. In an embodiment, the motion recognition camera 1360-2 and camera 1360-3 may be disposed on the first rim 1301 and/or the second rim 1302.

The camera 1360 included in the wearable device 1300 is not limited to the above-described eye tracking camera 1360-1 and the motion recognition camera 1360-2 and 1360-3. For example, the wearable device 1300 may identify an external object included in the FoV by using a camera disposed toward the user's FoV. The wearable device 1300 identifying the external object may be performed based on a sensor for identifying a distance between the wearable device 1300 and the external object, such as a depth sensor and/or a time of flight (ToF) sensor. The camera 1360 disposed toward the FoV may support an autofocus function and/or an optical image stabilization (OIS) function. For example, in order to obtain an image including a face of the user wearing the wearable device 1300, the wearable device 1300 may include the camera 1360 (e.g., a face tracking (FT) camera) disposed toward the face.

Although not illustrated, the wearable device 1300 according to an embodiment may further include a light source (e.g., LED) that emits light toward a subject (e.g., user's eyes, face, and/or an external object in the FoV) photographed by using the camera 1360. The light source may include an LED having an infrared wavelength. The light source may be disposed on at least one of the frame 1300, and the hinge units 1306 and 1307.

According to an embodiment, the battery module 1370 may supply power to electronic components of the wearable device 1300. In an embodiment, the battery module 1370 may be disposed in the first temple 1304 and/or the second temple 1305. For example, the battery module 1370 may be a plurality of battery modules 1370. The plurality of battery modules 1370, respectively, may be disposed on each of the first temple 1304 and the second temple 1305. In an embodiment, the battery module 1370 may be disposed at an end of the first temple 1304 and/or the second temple 1305.

The antenna module 1375 may transmit the signal or power to the outside of the wearable device 1300 or may receive the signal or power from the outside. In an embodiment, the antenna module 1375 may be disposed in the first temple 1304 and/or the second temple 1305. For example, the antenna module 1375 may be disposed close to one surface of the first temple 1304 and/or the second temple 1305.

The speaker 1355 may output a sound signal to the outside of the wearable device 1300. A sound output module may be referred to as a speaker. In an embodiment, the speaker 1355 may be disposed in the first temple 1304 and/or the second temple 1305 in order to be disposed adjacent to the ear of the user wearing the wearable device 1300. For example, the speaker 1355 may include a second speaker 1355-2 disposed adjacent to the user's left ear by being disposed in the first temple 1304, and a first speaker 1355-1 disposed adjacent to the user's right ear by being disposed in the second temple 1305.

The light emitting module may include at least one light emitting element. The light emitting module may emit light of a color corresponding to a specific state or may emit light through an operation corresponding to the specific state in order to visually provide information on a specific state of the wearable device 1300 to the user. For example, when the wearable device 1300 requires charging, it may emit red light at a constant cycle. In an embodiment, the light emitting module may be disposed on the first rim 1301 and/or the second rim 1302.

Referring to FIG. 13B, according to an embodiment, the wearable device 1300 may include the printed circuit board (PCB) 1390. The PCB 1390 may be included in at least one of the first temple 1304 or the second temple 1305. The PCB 1390 may include an interposer disposed between at least two sub PCBs. On the PCB 1390, one or more hardware (e.g., hardware illustrated by different blocks of FIGS. 2A and/or 2B) included in the wearable device 1300 may be disposed. The wearable device 1300 may include a flexible PCB (FPCB) for interconnecting the hardware.

According to an embodiment, the wearable device 1300 may include at least one of a gyro sensor, a gravity sensor, and/or an acceleration sensor for detecting the posture of the wearable device 1300 and/or the posture of a body part (e.g., a head) of the user wearing the wearable device 1300. Each of the gravity sensor and the acceleration sensor may measure gravity acceleration, and/or acceleration based on preset three-dimensional axes (e.g., x-axis, y-axis, and z-axis) perpendicular to each other. The gyro sensor may measure angular velocity of each of preset three-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1300 may identify the user's motion and/or gesture performed to execute or stop a specific function of the wearable device 1300 based on the IMU.

FIGS. 14A to 14B illustrate an example of an exterior of a wearable device according to an embodiment. A wearable device 1400 of FIGS. 14A to 14B may include at least a portion of hardware of the wearable device 1300 described with reference to FIGS. 13A and/or 13. According to an embodiment, an example of an exterior of a first surface 1410 and the housing of the wearable device 1400 may be illustrated in FIG. 14A, and an example of an exterior of a second surface 1420 opposite to the first surface 1410 may be illustrated in FIG. 14B.

Referring to FIG. 14A, according to an embodiment, the first surface 1410 of the wearable device 1400 may have an attachable shape on the user's body part (e.g., the user's face). Although not illustrated, the wearable device 1400 may further include a strap for being fixed on the user's body part, and/or one or more temples (e.g., the first temple 1304 and/or the second temple 1305 of FIGS. 13A to 13B). A first display 1350-1 for outputting an image to the left eye among the user's two eyes and a second display 1350-2 for outputting an image to the right eye among the user's two eyes may be disposed on the first surface 1410. The wearable device 1400 may further include rubber or silicon packing, which are formed on the first surface 1410, for preventing interference by light (e.g., ambient light) different from the light emitted from the first display 1350-1 and the second display 1350-2.

According to an embodiment, the wearable device 1400 may include cameras 1360-1 for capturing and/or tracking both eyes of the user adjacent to each of the first display 1350-1 and the second display 1350-2. The cameras 1360-1 may be referred to as the gaze tracking camera 1360-1 of FIG. 13B. According to an embodiment, the wearable device 1400 may include cameras 1360-5 and 1360-6 for capturing and/or recognizing the face of the user. The cameras 1360-5 and 1360-6 may be referred to as FT cameras. The wearable device 1400 may control an avatar representing the user in a virtual space based on a motion of the face of the user identified using the cameras 1360-5 and 1360-6. For example, the wearable device 1400 may change a texture and/or a shape of a portion of the avatar (e.g., a portion of the avatar representing a human face) by using information obtained by the cameras 1360-5 and 1360-6 (e.g., the FT cameras) and representing facial expression of the user wearing the wearable device 1400.

Referring to FIG. 14B, a camera (e.g., cameras 1360-7, 1360-8, 1360-9, 1360-10, 1360-11, and 1360-12) and/or a sensor (e.g., a depth sensor 1430) for obtaining information related to an external environment of the wearable device 1400 may be positioned on a second surface 1420 opposite to the first surface 1410 of FIG. 14A. For example, the cameras 1360-7, 1360-8, 1360-9, and 1360-10 may be positioned on the second surface 1420 to recognize an external object. The cameras 1360-7, 1360-8, 1360-9, and 1360-10 of FIG. 14B may correspond to the motion recognition cameras 1360-2 and 1360-3 of FIG. 13B.

For example, by using the cameras 1360-11 and 1360-12, the wearable device 1400 may obtain an image and/or a video to be transmitted to each of both eyes of the user. The camera 1360-11 may be positioned on the second surface 1420 of the wearable device 1400 to obtain an image to be displayed through the second display 1350-2 corresponding to a right eye among the two eyes. The camera 1360-12 may be positioned on the second surface 1420 of the wearable device 1400 to obtain an image to be displayed through the first display 1350-1 corresponding to a left eye among both eyes. The cameras 1360-11 and 1360-12 may correspond to the capturing camera 1360-4 of FIG. 13B.

According to an embodiment, the wearable device 1400 may include a depth sensor 1430 positioned on the second surface 1420 to identify a distance between the wearable device 1400 and an external object. By using the depth sensor 1430, the wearable device 1400 may obtain spatial information (e.g., a depth map) on at least a portion of a FoV of the user wearing the wearable device 1400. Although not illustrated, a microphone for obtaining a sound outputted from an external object may be positioned on the second surface 1420 of the wearable device 1400. The number of microphones may be one or more according to an embodiment.

In an embodiment, a method of more accurately identifying an intention of a user who has performed a user input that does not correspond to any function may be required. As described above, according to an embodiment, a wearable device (e.g., the wearable device 101 of FIG. 1) may comprise a plurality of sensors (e.g., the sensor 230 of FIG. 2A), a display (e.g., the display 220 of FIG. 2A), memory (e.g., the memory 215 of FIG. 2A) for storing instructions, and at least one processor (e.g., the processor 210 of FIG. 2A) for executing the instructions, and the at least one processor may be configured to identify a first input with respect to a location separated from all of a plurality of virtual objects (e.g., the virtual object 140 of FIG. 1, the virtual objects 511, 512, and 513 of FIG. 5, the virtual objects 621, 622, 623, 624, 625, and 630 of FIGS. 6 and 7, the virtual objects 810 and 820 of FIG. 8, the virtual object 930 of FIG. 9, or the virtual object 1010 of FIG. 10) by using a first sensor among the plurality of sensors. The at least one processor may be configured to identify, in response to a second input with respect to the location that is identified based on the first sensor within a preset duration after identifying the first input, at least one virtual object among the plurality of virtual objects that is adjacent to the location. The at least one processor may be configured to display a visual object (e.g., the visual objects 162 and 164 of FIG. 1, the visual objects 531 and 532, the visual object 640 of FIG. 6, the visual objects 720 and 730 of FIG. 7, or the visual objects 830 and 840 of FIG. 8) indicating a third input that is corresponding to a function of the at least one virtual object and is identifiable by a second sensor among the plurality of sensors, on the display.

For example, the at least one processor may be configured to identify, based on property information of the at least one virtual object, the second sensor to be used for receiving the third input based on the second sensor among the plurality of sensors.

For example, the at least one processor may be configured to identify, in response to the second input, the at least one virtual object adjacent to the location by comparing distances between the plurality of virtual objects and the location.

For example, the at least one processor may be configured to identify the distances based on three-dimensional coordinate values of the location and three-dimensional coordinate values assigned to the plurality of virtual objects. The at least one virtual object may be positioned adjacent to the location on the display based on three-dimensional coordinate values assigned to the at least one virtual object.

For example, the at least one processor may be configured to identify the first input including a hand gesture of a user wearing the wearable device by using sensor data of the first sensor which is an image sensor. The at least one processor may be configured to display the visual object including text corresponding to speech associated with the function based on the second sensor which is a microphone.

For example, the at least one processor may be configured to display, in a state identifying the hand gesture based on sensor data of the first sensor, a line (e.g., the line 152 of FIG. 1) extended from a hand performing the hand gesture to the location on the display.

For example, the at least one processor may be configured to display the visual object in a location adjacent to the at least one virtual object displayed on the display.

For example, the at least one processor may be configured to display the visual object in response to the second input that is identified after identification of the first input with respect to the location, which is a first location, and is identified in a second location apart from all of the plurality of virtual objects and included in a preset range from the first location.

As described above, according to an embodiment, a method of a wearable device may comprise identifying a first input with respect to a location separated from all of the plurality of virtual objects by using a first sensor among a plurality of sensors of the wearable device (e.g., the operation 1210 of FIG. 12). The method may comprise identifying, in response to a second input with respect to the location that is identified based on the first sensor within a preset duration after identifying the first input, at least one virtual object among the plurality of virtual objects that is adjacent to the location (e.g., the operation 1220 of FIG. 12). The method may comprise displaying a visual object indicating a third input that is corresponding to a function of the at least one virtual object and is identifiable by a second sensor among the plurality of sensors, on a display of the wearable device (e.g., the operation 1230 of FIG. 12).

For example, the displaying may comprise identifying, based on property information of the at least one virtual object, the second sensor to be used for receiving the third input among the plurality of sensors.

For example, the identifying the at least one virtual object may comprise identifying, in response to the second input, the at least one virtual object adjacent to the location by comparing distances between the plurality of virtual objects and the location.

For example, the identifying the at least one virtual object may comprise identifying the distances based on three-dimensional coordinate values of the location and three-dimensional coordinate values assigned to the plurality of virtual objects. The at least one virtual object may be positioned adjacent to the location on the display based on three-dimensional coordinate values assigned to the at least one virtual object.

For example, the identifying the first input may comprise identifying the first input including a hand gesture of a user wearing the wearable device by using sensor data of the first sensor which is an image sensor. The displaying may comprise displaying the visual object including text corresponding to speech associated with the function based on the second sensor which is a microphone.

For example, the identifying the first input may comprise displaying, in a state identifying the hand gesture based on sensor data of the first sensor, a line extended from a hand performing the hand gesture to the location on the display.

For example, the displaying may comprise displaying the visual object in a location adjacent to the at least one virtual object displayed on the display.

For example, the displaying may comprise displaying the visual object in response to the second input that is identified after identification of the first input with respect to the location, which is a first location, and is identified in a second location apart from all of the plurality of virtual objects and included within a preset range from the first location.

As described above, according to an embodiment, a wearable device may comprise one or more sensors, a display, memory, and at least one processor. The at least one processor may be configured to obtain, based on identifying a first input with respect to a first location in a virtual space provided through the display by using the one or more sensors, whether a virtual object is identified at the first location. The at least one processor may be configured to execute, in a first state identifying a first virtual object at the first location, a first function, indicated by the first input, assigned to the first virtual object. The at least one processor may be configured to identify, in a second state different from the first state, a second virtual object positioned at a second location in the virtual space adjacent to the first location based on identifying a second input with respect to the first location. The at least one processor may be configured to display a visual object including text for calling a second function that is executable based on the second virtual object on the display.

For example, the at least one processor may be configured to display the visual object based on identifying the second input within a preset duration after identifying the first input.

For example, the wearable device may further comprise a microphone. The at least one processor may be configured to determine, based on audio data obtained by using the microphone of which a state is switched to an enabled state while displaying the visual object, whether speech including the text is received.

For example, the at least one processor may be configured to display the visual object in a third location of the display adjacent to the second virtual object.

As described above, according to an embodiment, a method of a wearable device may comprise obtaining, based on identifying a first input with respect to a first location in a virtual space provided through a display of the wearable device by using one or more sensors of the wearable device, whether the virtual object is identified at the first location. The method may comprise executing, in a first state identifying a first virtual object at the first location, a first function, indicated by the first input, assigned to the first virtual object. The method may comprise identifying, in a second state different from the first state, a second virtual object positioned at a second location in the virtual space adjacent to the first location based on identifying a second input with respect to the first location. The method may comprise displaying a visual object including text for calling a second function that is executable based on the second virtual object on the display.

For example, the displaying may comprise displaying the visual object based on identifying the second input within a preset duration after identifying the first input.

For example, the displaying may comprise determining, based on audio data obtained by using a microphone of the wearable device of which a state is switched to an enabled state while displaying the visual object, whether speech including the text is received.

For example, the displaying may comprise displaying the visual object in a third location of the display adjacent to the second virtual object.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device (101) comprising:
a plurality of sensors (230);
a display (220);
memory (215) including one or more storage media storing instructions; and
at least one processor (210) including processing circuitry, wherein the instructions, when executed by the at least one processor individually and/or collectively, cause the wearable device to:
identify a first input with respect to a location separated from all of a plurality of virtual objects (140; 511, 512, 513; 621, 622, 623, 624, 625, 630; 810, 820; 930; 1010) by using a first sensor among the plurality of sensors;
identify, in response to a second input with respect to the location that is identified based on the first sensor within a preset duration after identifying the first input, at least one virtual object among the plurality of virtual objects that is adjacent to the location; and
display a visual object (162, 164; 531, 532; 640; 720, 730; 830, 840) indicating a third input that is corresponding to a function of the at least one virtual object and is identifiable by a second sensor among the plurality of sensors, on the display.

2. The wearable device of claim 1, wherein the instructions, when executed by the at least one processor individually and/or collectively, cause the wearable device to:
identify, based on property information of the at least one virtual object, the second sensor to be used for receiving the third input based on the second sensor among the plurality of sensors.

3. The wearable device of claim 1 to claim 2, wherein the instructions, when executed by the at least one processor individually and/or collectively, cause the wearable device to:
identify, in response to the second input, the at least one virtual object adjacent to the location by comparing distances between the plurality of virtual objects and the location.

4. The wearable device of claim 1 to claim 3, wherein the instructions, when executed by the at least one processor individually and/or collectively, cause the wearable device to:
identify the distances based on three-dimensional coordinate values of the location and three-dimensional coordinate values assigned to the plurality of virtual objects,
wherein the at least one virtual object is positioned adjacent to the location on the display based on three-dimensional coordinate values assigned to the at least one virtual object.

5. The wearable device of claim 1 to claim 4, wherein the instructions, when executed by the at least one processor individually and/or collectively, cause the wearable device to:
identify the first input including a hand gesture of a user wearing the wearable device by using sensor data of the first sensor which is an image sensor;
display the visual object including a text corresponding to a speech associated with the function based on the second sensor which is a microphone.

6. The wearable device of claim 1 to claim 5, wherein the instructions, when executed by the at least one processor individually or collectively, further cause the wearable device to:
display, in a state identifying the hand gesture based on sensor data of the first sensor, a line (152) extended from a hand performing the hand gesture to the location on the display.

7. The wearable device of claim 1 to claim 6, wherein the instructions, when executed by the at least one processor individually and/or collectively, cause the wearable device to:
display the visual object in a location adjacent to the at least one virtual object displayed on the display.

8. The wearable device of claim 1 to claim 7, wherein the instructions, when executed by the at least one processor individually and/or collectively, cause the wearable device to:
display the visual object in response to the second input that is identified after identification of the first input with respect to the location, which is a first location, and is identified in a second location apart from all of the plurality of virtual objects and included in a preset range from the first location.

9. A method of a wearable device, comprising:
identifying (1210) a first input with respect to a location separated from all of a plurality of virtual objects by using a first sensor among a plurality of sensors of the wearable device;
identifying (1220), in response to a second input with respect to the location that is identified based on the first sensor within a preset duration after identifying the first input, at least one virtual object among the plurality of virtual objects that is adjacent to the location; and
displaying (1230) a visual object indicating a third input that is corresponding to a function of the at least one virtual object and is identifiable by a second sensor among the plurality of sensors, on a display of the wearable device.

10. The method of claim 9, wherein the displaying comprises:
identifying, based on property information of the at least one virtual object, the second sensor to be used for receiving the third input among the plurality of sensors.

11. The method of claim 9 to claim 10, wherein the identifying the at least one virtual object comprises:
identifying, in response to the second input, the at least one virtual object adjacent to the location by comparing distances between the plurality of virtual objects and the location.

12. The method of claim 9 to claim 11, wherein the identifying the at least one virtual object comprises:
identifying the distances based on three-dimensional coordinate values of the locations and three-dimensional coordinate values assigned to the plurality of virtual objects, and
wherein the at least one virtual object is positioned adjacent to the location on the display based on three-dimensional coordinate values assigned to the at least one virtual object.

13. The method of claim 9 to claim 12, wherein the identifying the first input comprises identifying the first input including a hand gesture of a user wearing the wearable device by using sensor data of the first sensor which is an image sensor;
wherein the displaying comprises:
displaying the visual object including text corresponding to speech associated with the function based on the second sensor which is a microphone.

14. The method of claim 9 to claim 13, wherein the identifying the first input comprises:
displaying, in a state identifying the hand gesture based on sensor data of the first sensor, a line extended from a hand performing the hand gesture to the location on the display.

15. The method of claim 9 to claim 14, wherein the displaying comprises:
displaying the visual object in a location adjacent to the at least one virtual object displayed on the display.
